(19) Europäisches Patentamt / European Patent Office / Office européen des brevets

(11) **EP 4 430 121 B1**

(12) **EUROPEAN PATENT SPECIFICATION**

(45) Date of publication and mention of the grant of the patent:
**21.01.2026 Bulletin 2026/04**

(21) Application number: **22817571.7**

(22) Date of filing: **10.11.2022**

(51) International Patent Classification (IPC):
*C08L 55/02* (2006.01)    *C08L 25/12* (2006.01)
*C08F 6/00* (2006.01)    *C08F 6/22* (2006.01)

(52) Cooperative Patent Classification (CPC):
(C-Sets available)
**C08F 279/04; C08F 6/005; C08F 6/008; C08F 6/22;**
**C08L 25/12; C08L 55/02;** C08F 212/10;
C08L 2205/14                           (Cont.)

(86) International application number:
**PCT/EP2022/081418**

(87) International publication number:
**WO 2023/083936 (19.05.2023 Gazette 2023/20)**

(54) **THERMOPLASTIC ABS MOLDING COMPOSITIONS WITH IMPROVED SURFACE**

THERMOPLASTISCHE ABS-FORMMASSEN MIT VERBESSERTER OBERFLÄCHE

COMPOSITIONS DE MOULAGE ABS THERMOPLASTIQUES À SURFACE AMÉLIORÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.11.2021 EP 21207963**

(43) Date of publication of application:
**18.09.2024 Bulletin 2024/38**

(73) Proprietor: **INEOS Styrolution Group GmbH**
**60325 Frankfurt (DE)**

(72) Inventors:
• **NIESSNER, Norbert**
  **67159 Friedelsheim (DE)**
• **FISCHER, Wolfgang**
  **69124 Heidelberg (DE)**
• **BANASZAK, Brian J.**
  **67117 Limburgerhof (DE)**
• **HONEKER, Roman**
  **50737 Köln (DE)**
• **MICHELS, Gisbert**
  **51375 Leverkusen (DE)**
• **VERSTRAETEN, Rudy**
  **2340 Beerse (BE)**
• **CHUNG, Andrew**
  **Plainfield, Illinois 60585 (US)**
• **HWANG, YoungHwa**
  **Ulju-gun Ulsan, Ulsan 44932 (KR)**
• **AHN, SangJun**
  **Seoul Seoul 05658 (KR)**
• **TAELMAN, Koen**
  **2930 Brasschaat (BE)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
WO-A1-2014/122177    WO-A1-2016/184765
WO-A1-2017/093468    WO-A1-2019/092237
WO-A1-2020/020869    KR-A- 20030 034 405

Remarks:
The file contains technical information submitted after the application was filed and not included in this specification

EP 4 430 121 B1

(52) Cooperative Patent Classification (CPC): (Cont.)

C-Sets
**C08F 6/005, C08L 55/02;**
**C08F 6/008, C08L 55/02;**
**C08F 6/22, C08L 55/02;**
**C08F 279/04, C08F 212/08, C08F 220/44;**
**C08L 25/12, C08L 55/02;**
**C08L 55/02, C08L 25/12**

**Description**

The invention relates to thermoplastic acrylonitrile-butadiene-styrene (ABS) molding compositions, which can be produced at large scale and which lead to advantageous surface properties.

It is known that ABS polymer products with high surface quality require a low amount of salt specks on the surface. Salt specks often stem from deposits on the extruder screw of the ABS process, which typically is a single step process to produce ABS materials out of SAN, which is fed, in particular as melt, as granule or powder feed, to the extruder, and rubber coming from precipitation, eventually sintering and centrifugation.

Therefore, some ABS producers add another process step, before the ABS extrusion process, which is a rubber drying step in a rotary dryer, flash dryer and/or fluid bed dryer. Typically, these pre-drying steps keep the precipitating agent, e.g. magnesium sulfate, within the rubber, however as a finely dispersed powder which does not result in strongly visible surface defects. As a flipside, such a process consumes extra energy and extra assets, hence is more expensive than a single ABS extrusion step using ABS rubber not being pre-dried. Another, very important reason against the rubber pre-drying step is the danger of ignition. Finely dispersed, reactive polymers like polybutadiene are destined to ignite if not properly protected by a large amount of stabilizer and/or protective atmosphere, such as nitrogen. ABS processes not requiring a pre-drying step are in the focus of the present invention.

According to DE-A-2037784, graft rubber moist after centrifuging can be introduced into an SAN melt with evaporation of water, and a thermoplastic composition containing up to 60% of graft rubber can be obtained. This process requires a relatively large amount of electrical energy, and rubber particles and assistant residues are entrained with the evaporating water and have to be disposed, often of as special waste. The water stripped off in the form of steam and contaminated by rubber components must be regarded, together with the cooling water required for condensation, as waste water which requires treatment. Moreover, deposits of auxiliaries / additives which may occur in the extruders may contaminate the product.

The old patents US 5151026 and US 5232649 are directed to the removal of liquids from solids, in particular from polystyrene.

WO 2017/093468 A1 discloses the preparation of thermoplastic ABS molding compositions based on SAN and ABS including mechanical dewatering of the precipitated ABS and drying of the dewatered ABS. The median particle diameter d50 of the graft base rubber is in the range from 100 to 1000 nm.

It is an object of the present invention to provide a thermoplastic ABS molding composition with improved surface properties, such as dull reduced and gloss improved surfaces, respectively.

For the production of thermoplastic ABS molding compositions as moist, or more or less partially dewatered rubber can be obtained from slurries by pressing out the water mechanically in presses, including screw presses. This is frequently carried out by using an apparatus which has strainer barrels through which the water can flow away in the same way as through a sieve. The rubber obtained in this manner, which still has a certain residual moisture content, is then pressed to form bales or is granulated.

Obtaining thermoplastics from an aqueous environment has also led to similar solutions. JP S61 53362 (B2, Toshiba, 1986) describes a process for obtaining polymers from polymers which have not been dried or from slurries. An example is the dewatering of a poly-SAN slurry having a solids content of about 40% and a particle size of 0.3 mm in a twin-screw extruder, which is provided with two strainer barrels and three devolatilization orifices. The devolatilization is effected under reduced pressure.

JP S59 27776 (B2, Toray, 1984) describes a process for dewatering and plastificating ABS polymers in an extruder, the water being removed in a direction opposite to the transport direction, with subsequent two-stage devolatilization, or, in another embodiment, by means of a special screw. Such screw designs are available only as expensive specially produced products.

EP-A 0534235 describes the preparation of toughened thermoplastics by incorporating mechanically partially dewatered rubber in a thermoplastic above the softening point of the thermoplastic, the rubber being partially dewatered prior to incorporation in an extruder and the remaining residual water being removed during the incorporation by devolatilization apparatuses which may be arranged before or after the mixing-in point.

In this process a large amount of water still has to be evaporated, two machines furthermore being required, i.e. a main extruder and a side extruder, and likewise concentrates of only limited use being obtained.

US 5817266 discloses that the essentially mechanical dewatering of water-moist rubber can be carried out in a single twin-screw continuous kneader and compounder having commercial components to give a compacted, externally dry rubber, compact material, if a machine having a pair of double-thread or preferably triple-thread screws rotating in the same direction is used, to the feed section of which the precipitated, previously dewatered but water-moist rubber is fed, the extruder possessing, in succession in the conveying direction, at least two back-up zones and two associated dewatering orifices and subsequently at least one kneading zone and thereafter at least one devolatilization zone and finally a discharge zone whose orifice may, if required, be closed by a die lip.

US 6165399 describes a process which permits the preparation of an impact-resistant thermoplastic comprising at least one water-moist elastomer component and one or more thermoplastic, brittle polymers in a technically simple manner, as far as possible in one process step. It further describes a process by means of which polymer blends can be prepared in one process step by mixing of the thermoplastic with further polymers. A process is described which has the flexibility to permit the blending of even the most different polymers with one another and also the blending of greatly varying quantity mixing ratios of thermoplastic polymer and elastomer component, which give the toughened thermoplastics having low to very high rubber contents, and which at the same time is reliable in operation.

According to WO 2015/000873, thermoplastic compositions can be prepared with reduced salt concentration, which have a smooth surface with low amount of visible salt specks.

However, it is not only important to reduce salt specks in order to achieve a high surface quality. Large ABS particles, especially those in mass-ABS, have a negative impact on surface quality, especially on gloss. Large rubber particles on the surface scatter the light and therefore the respective ABS part appears dull and gloss reduced, respectively.

The invention relates to a thermoplastic ABS molding composition, comprising (or consisting of)

30 - 80 wt.-%, based on the weight of the molding composition, of at least one thermoplastic copolymer matrix A, with components based on the dry weight of A:

A1: 50 - 80 wt.-% of styrene and/or $\alpha$-methylstyrene and/or p-methyl-styrene
A2: 20 - 40 wt.-% of (meth)acrylonitrile
A3: 0 - 20 wt.-% of one or more co-polymerizable monomers, preferably $C_1$-$C_8$-acrylates and/or methyl-methacrylate,

19.99 - 60 wt.-%, based on the weight of the molding composition, of at least one ABS-copolymer B, with components based on the dry weight of B:

B1: 30 - 90 wt.-% of one or more rubber component(s) as graft basis, having a glass transition temperature of less than 0°C, made from, based on the dry weight of B1,
B11: 50 - 100 wt.-% of one or more of butadiene or isoprene, and
B12: optionally, 0 - 50 wt.-% of further monomers, in particular from the group of styrene, methyl methacrylate, DCPA, butanediol diacrylate, ethylene glycol diacryate and tris-allyl-cyanurate; preferably styrene,
B2: 10 - 70 wt.-% of one or more graft stages, polymerized after the graft basis, with, based on the dry weight of B2,
B21: 50 - 90 wt.-% of styrene, $\alpha$-methylstyrene and/or p-methyl-styrene, B22: 5 - 40 wt.- % of (meth)acrylonitrile, B21: 0 - 40 wt.-% of one or more co-polymerizable monomers, preferably $C_1$-$C_8$-acrylates and/or methyl-methacrylate,

0 - 40 wt.-%, in particular 0 - 20 wt.-%, based on the weight of the molding composition, of one or more polymers C selected from the group of polycarbonates, polyesters, polyester carbonates and polyamides,

0.01 - 20 wt.- %, in particular 0.3 - 5 wt.-%, based on the weight of the molding composition, of one or more additives D, in particular from the group of thermal stabilizers, UV stabilizers, dispersants, pigments, lubricants, dyestuff, colorants, inorganic fillers and organic fillers,

wherein, in the thermoplastic ABS molding composition, in particular after thermoplastic processing by extrusion, thermoforming and/or injection molding, the grafted rubber of component B is present in form of small particles with a weight based average particles size of 50 to 950 nm, in particular 80 to 600 nm, and wherein 10 to 90 wt.-%, in particular 30 to 90 wt.-% of the grafted rubber particles have an aspect ratio of more than 1, preferably at least 1.25 and even more preferably at least 1.5.

With the grafted rubber particles having an aspect ratio of more than 1, the thermoplastic ABS molding composition provides improved surface properties, in particular an improved optical quality. According to the invention, larger particles, that might be present directly beneath the surface of the thermoplastic ABS molding composition and can disturb the optical appearance of the thermoplastic ABS molding composition and/or lead to undesired roughness of the surface, are avoided.

Preferably, the grafted rubber particles of component B have an ellipsoid shape, also referred to as rod-like form, and whereby the aspect ratio is the ratio between a largest diameter and a smallest diameter, also referred to as longest and shortest axes, of the ellipsoid. Accordingly, the aspect ratio is the quotient of a longest axis over a shortest axis of one grafted rubber particle of component B. The aspect ratio can be obtained from transmission electron microscopy (TEM) images, in particular by measuring the longest and shortest axes, respectively.

In particular, the grafted rubber particles have an aspect ratio of more than 1, when the thermoplastic ABS molding composition is in a solid state. The thermoplastic ABS molding composition is typically in a solid state at a temperature of less than the melting temperature of the thermoplastic ABS molding composition, in particular at a temperature of 85°C or less.

Preferably, the weight-based particle size distribution of the grafted rubber particles of component B is for >90 wt.-% (% by weight) of all grafted rubber particles in the range of 50 to 950 nm, and 10 to 90 wt.-%, in particular 30 to 90 wt.-%, of the grafted rubber particles have an aspect ratio of more than 1, preferably at least 1.25 and even more preferably at least 1.5, beneath the surface area in a distance from 0.01 to 10 $\mu$m to the surface area of the thermoplastic ABS molding composition, in particular the molding, granulate, foil or coating.

More preferably, at least 40 wt.-% of the grafted rubber particles of component B have an aspect ratio of more than 1, in particular at least 1.25 and even more preferably at least 1.5, based on the total weight of component B comprised in the thermoplastic ABS molding composition.

Typically, the aspect ratio of the grafted rubber particles is not more than 3, preferably not more than 2.

The thermoplastic ABS molding composition can be produced by a process, which comprises (or consists of) the following steps:

> a) mixing the components A, B and D and optionally C, by using at least one extruder comprising (or consisting of):
>
>> a first feeding zone FZ1, in which component B and at least part of component D are fed to the at least one extruder;
>> optionally a preheating zone PZ, in which component B is heated to a temperature of 100°C or below;
>> a mechanical dewatering zone DZ, in which component B, having a water content of more than 20 wt.-%, in particular more than 25 wt.-%, based on the total weight of component B, is mechanically dewatered at a dewatering temperature Tdw in a range from 50°C to 200°C, preferably from 50°C to 180°C, more preferably from 50°C to 160°C, more preferably from 50°C to 120°C, more preferably from 50°C to 100°C, whereby the water content in component B is reduced by 10 wt.-% to 90 wt.-%, based on the water comprised in component B when fed to the first feeding zone FZ1,
>> and wherein:
>>
>>> the mechanical dewatering zone DZ comprises at least one dewatering aperture, in particular for liquid water;
>>> in a second feeding zone FZ2, at least part of component A and optionally part of component D are fed, preferably in melt and/or solid form, more preferably in melt form, to the at least one extruder, where component A is brought in contact with component B;
>>> in at least one degassing zone DG, preferably two or more degassing zones DG, component A and/or component B are degassed;
>>> in a third feeding zone FZ3, part of component A, component C and/or part of component D are optionally fed to the extruder together or separately from one another; and
>
> b) removing the thermoplastic ABS molding composition from a discharge zone CZ of the extruder.

Preferably, step b) is followed by a pelletizing process for the thermoplastic ABS molding composition, in order to form a granulate of the thermoplastic ABS molding composition.

Components A, B and D and optionally C are typically mixed in the at least one extruder and the thermoplastic ABS molding composition is produced. At least two extruders can be operated in parallel, wherein preferably each extruder comprises a first feeding zone FZ1, optionally a preheating zone PZ, a mechanical dewatering zone DZ, a second feeding zone FZ2, at least one degassing zone DG, a third feeding zone FZ3 and a discharge zone CZ. Further, the at least one extruder can comprise one or more first feeding zones FZ1, optionally one or more preheating zones PZ, one or more mechanical dewatering zones DZ, one or more second feeding zones FZ2, one or more degassing zones DG, one or more third feeding zones FZ3 and one or more discharge zones CZ.

Up to ten, preferably up to five, feeding zones are possible. Preferably, the zones of the at least one extruder are arranged in the given order in downstream conveying direction. In particular, the optional preheating zone PZ is located upstream of the mechanical dewatering zone DZ and directly followed in conveying direction by the mechanical dewatering zone DZ. Preferably, each of the one or more mechanical dewatering zone DZ comprises at least one dewatering aperture. More preferably, each of the one or more mechanical dewatering zone DZ comprises exactly one dewatering aperture.

The at least one extruder preferably comprises two or more degassing zones DG and in the two or more degassing zones DG component A and/or component B are degassed, wherein at least one of the two or more degassing zones DG is operated at a first degassing pressure $P_{d1}$, at least a further one of the two or more degassing zones DG is operated at a second degassing pressure $P_{d2}$. Preferably, the first degassing pressure $P_{d1}$ is higher than the second degassing pressure $P_{d2}$ and more preferably the first degassing pressure $P_{d1}$ is higher than 0.8 bar absolute and/or the second degassing pressure $P_{d2}$ is lower than 1.2 bar absolute.

Further, the at least one extruder more preferably comprises a first degassing zone DG1 and a second degassing zone DG2 and in the first degassing zone DG1 and the second degassing zone DG2 component A and/or component B are degassed, wherein the first degassing zone DG1 is operated at a first degassing pressure $P_{d1}$, the second degassing zone DG2 is operated at a second degassing pressure $P_{d2}$ and the first degassing pressure $P_{d1}$ is higher than the second degassing pressure $P_{d2}$ and wherein the first degassing pressure $P_{d1}$ is higher than 0.8 bar absolute and the second degassing pressure $P_{d2}$ is lower than 1.2 bar absolute.

In the entry of the at least one extruder in the first feeding zone FZ1 component B is preferably present in a premix with at least part of component D. The part of component D, which is fed to the at least one extruder in the first feeding zone FZ1 comprises or consists of in particular a stabilizer such as a thermal stabilizer and/or UV stabilizer.

In the optional preheating zone PZ, the temperature of component B and part of component D is raised. Preferably, component B is heated to a maximum of 200°C, more preferably of 180°C, even more preferably of 160°C, even more preferably of 120°C and even more preferably of 100°C. Preferably, component B is heated to a temperature of at least 30°C, more preferably at least 45°C in the preheating zone PZ. The preheating can be achieved by active heating and/or by shear energy of extruder elements, preferably by shear energy of extruder elements. In a preferred embodiment, the preheating zone PZ comprises at least one kneading block and/or counterflow conveying element.

Due to the at least one kneading block and/or at least one counterflow conveying element, higher shear energy is introduced compared to conveying elements, which heats component B to release the water more easily in the subsequent mechanical dewatering zone DZ. Preferably, the preheating zone PZ comprises at least one kneading block and/or at least one counterflow conveying element, which are arranged upstream, referring to the conveying direction, of the mechanical dewatering zone DZ, in particular upstream, referring to the conveying direction, of the at least one dewatering aperture, orifice or opening.

A conveying element can be arranged between the optional preheating zone PZ and the mechanical dewatering zone DZ and/or forms a transition from the preheating zone PZ to the mechanical dewatering zone DZ. In particular, the preheating zone PZ and the mechanical dewatering zone DZ are separated from each other by at least one conveying element.

In particular, the preheating zone PZ is free of dewatering and/or degassing orifices, openings or apertures. Further, the preheating zone PZ can comprise or consist of closed, in particular in radial direction, barrels.

Due the preferred preheating of component B, the subsequent mechanical dewatering is improved as the preheated component B is easier releasing the water. If component B is too cold in the mechanical dewatering zone DZ, significant amounts of water are hold back in the component and cannot be removed in the mechanical dewatering zone. The preheating and mechanical dewatering is preferably supported by an increased pressure. Preferably, a dewatering pressure $P_{dw}$ in the mechanical dewatering zone DZ is at least 10 bar.

In the mechanical dewatering zone DZ, the water content in component B is preferably reduced from more than 20 wt.-%, in particular more than 25 wt.-%, based on the total weight of component B, by 10 wt.-% to 90 wt.-%, based on the water comprised in component B. The total weight of component B denotes the sum the dry weight of component B and the weight of the water comprised therein.

Water is removed from component B preferably through the at least one dewatering aperture, in particular in a liquid state. In order to determine the water content of component B in and/or after the mechanical dewatering zone DZ, the amount of water withdrawn in the mechanical dewatering zone DZ can be measured. The temperature of component B can be further enhanced in the mechanical dewatering zone DZ. The mechanical dewatering zone DZ serves for dewatering component B and a part of residual water contained in component B is mechanically removed (squeezing).

The mechanical dewatering zone DZ often contains at least a first, retarding element, kneading block and/or counterflow conveying element and at least one dewatering orifice or aperture which is present upstream of the first retarding element, kneading block and/or counterflow conveying element, preferably by a distance corresponding to at least one screw diameter Ds. The material is typically conveyed against at least one retarding element, kneading block and/or counterflow conveying element, which acts as an obstacle and is present, as a rule, at the end of the mechanical dewatering zone DZ. This builds up a pressure, which forces water out of component B.

The pressure can be built up by different arrangements of screw elements, kneading elements or other retarding elements. Examples of possible retarding elements are given in US 6165399.

In addition to US 6165399, the dewatering orifices used can comprise screens or mesh filters. The temperature of the outcoming water is in general from 20 to 99°C, preferably from 25 to 80°C, measured at the at least one dewatering aperture or orifice. In the case, where at least two dewatering apertures are present in at least one dewatering zone DZ, the temperature of the outcoming water at a first dewatering aperture is preferably at least 10°C lower, more preferably at least 20°C lower, than the temperature of the outcoming water at a second dewatering aperture, wherein the first dewatering aperture is located upstream of the second dewatering aperture.

Preferably, at least one dewatering aperture of the mechanical dewatering zone DZ comprises at least one stuffer screw with preferably two shafts. Preferably, the at least one stuffer screw comprises screw elements with U-shape. With the U-shaped form of the screw element an improved dewatering performance can be achieved as less water is retained as compared to for example closely intermeshing elements.

Preferably, at least one dewatering aperture of the mechanical dewatering zone DZ is equipped with a metal-wire-mesh composite sheet (MWC), a finely perforated metal sheet, and/or a slit diaphragm.

Further, one or more further plastication sections PS can be present before the second feeding zone FZ2, in which component A, preferably in melt and/or solid form, is fed in, ie. downstream of the last mechanical dewatering zone DZ. In this plastication section PS, the very substantially dewatered component B, for example the rubber powder, is first homogenized and plasticated alone. Component A and, if required, components C and/or D are accordingly introduced into a viscous melt of component B in this embodiment. In this case, a possible further plastication section PS downstream of the mixing of component A serves merely for homogenizing the mixture of the components already present in the plastic state.

Component A is preferably partly or completely fed to the at least one extruder in the second feeding zone FZ2, where component A is in particular mixed with component B already present in the at least one extruder. The at least part of component A fed to the at least one extruder in the second feeding zone FZ2 can comprise part of component D.

The second feeding zone FZ2 is preferably directly or indirectly followed by the at least one degassing zone DG, in particular the first degassing zone DG1 and the second degassing zone DG2, each of which is provided with one or more degassing orifices. In the at least one degassing zone DG, the remaining residual water which was not mechanically removed in mechanical dewatering zone DZ is partially or completely removed. Because the temperatures of the polymer are here usually above 100°C, the water generally leaves the at least one extruder mainly as steam. The energy required for evaporating the water has, as a rule, already been introduced into the plastication sections PS. However, it is also possible to supply the energy in a conventional manner by heating the extruder barrel.

The at least one degassing orifice is preferably present at the top of the extruder. A lateral arrangement (on one side or both sides) of the at least one degassing orifice is like-wise preferred.

Part of component A can further be fed to the at least one extruder in the third feeding zone FZ3, where also component C can be fed to the at least one extruder. In addition, the part of component A fed in the third feeding zone FZ3 can comprise part of component D. Components A, C and D can be fed in the third feeding zone FZ3 together or separately from one another.

The third feeding zone FZ3 can be arranged between the at least one degassing zone DG, in particular between a last of the at least one degassing zone DG and the discharge zone CZ, thus the at least one degassing zone DG is preferably positioned between the second feeding zone FZ2 and the third feeding zone FZ3. Alternatively, the third feeding zone FZ3 can be arranged between two of two or more degassing zones DG, in particular between the first degassing zone DG1 and the second degassing zone DG2.

Preferably, the third feeding zone FZ3 comprises at least one liquid inlet and at least one mixing element downstream of the liquid inlet.

The total amount of component D is preferably the sum of the parts of D, which are fed in the first feeding zone FZ1, optionally the second feeding zone FZ2 and optionally the third feeding zone FZ3.

The total amount of component A is preferably the sum of the at least part of A, which is fed in the second feeding zone FZ2 and optionally the part of A, which is fed in the third feeding zone FZ3.

The total amount of component B is preferably fed to the at least one extruder in the first feeding zone FZ1.

In the discharge zone CZ, the thermoplastic ABS molding composition, comprising components A, B, D and optionally C, is preferably conveyed out of the at least one extruder. The discharge zone CZ can comprise further conveying elements. The discharge zone CZ is preferably the last section of the extruder and preferably comprises or consists of a conveying screw and a closed barrel part, which ends into a defined discharge orifice. The discharge zone CZ is preferably heated.

The water content of the thermoplastic ABS molding composition in the discharge zone CZ is as a rule from 0.05 to 2 wt.-%, based on this dry thermoplastic ABS molding composition. The temperature of the thermoplastic ABS molding composition coming out of the discharge orifice is as a rule from 150°C to 350°C, preferably from 180°C to 330°C, depending on the type of polymers used.

Component B, when fed to the at least one extruder, is in particular a moist solid. Component B is preferably fed to the first feeding zone FZ1 as a substantially wet component B. Preferably, component B is fed to the first feeding zone FZ1 with a water content of not more than 70 wt.-%, more preferably not more than 50 wt.-%, based on the total weight of component B, and where component B has a grafting degree of not more than 60%, more preferably not more than 50%, in particular not more than 45%, wherein the grafting degree is the percentage ratio of the weight of component B2 related to the sum of the weight of components B1, also referred to as graft basis B1 or rubber B1, and B2, respectively present in component B.

Preferably, the weight-based particle size distribution of the rubber particles in component B has >90 wt.-% of all rubber particles in the range of 50 to 950 nm.

Preferably, the particles of component B have a bimodal weight-based particle size distribution for particles <70 wt-%, more preferably <65 wt-%, of all rubber particles in the range of 50 to 150 nm. More preferably, the particles of component B have a bimodal weight-based particle size distribution and the rubber B1 is made from butadiene and optionally 1 to 20 wt-%, based on the weight of the rubber B1, of further monomers, in particular from the group of styrene, methyl methacrylate, DCPA, butanediol diacrylate, ethylene glycol diacryate and tris-allyl-cyanurate, preferably styrene.

Preferably, component A has a content of acrylonitrile of less than 40 wt-%, more preferably less than 36 wt-%, based on the dry weight of component A, and the rubber B1 of component B is made of butadiene or of butadiene and styrene.

Preferably, the graft basis B1 particles in component B have a gel content of more than 66%, more preferably more than 68%, even more preferably more than 70%. Preferably, the graft basis B1 particles in component B have a swelling index of less than 42, more preferably less than 40, even more preferably less than 38. In a preferred embodiment, the graft basis B1 particles in component B have a gel content of 90% or less, more preferably 85% or less and the swelling index is 15 or more, more preferably 20 or more.

It was found that with this gel content in combination with the given swelling index, improved surface qualities for the thermoplastic ABS molding composition, based on smaller emulsion particles, are achieved. In particular, dull and gloss reduced, respectively, surfaces are avoided, even though when subjected to a shear rate typically observed in injection molding and extrusion.

In a preferred embodiment, the thermoplastic ABS molding composition has a yellowness index YI of 20 or less, in particular of 18 or less, at a mold temperature of 260°C.

Preferably, the graft rubber particles in component B have been prepared by using either an inorganic peroxide, in particular persulfate (e.g. KPS), or an organic compound, in particular an organic peroxide or azobisisobutyronitrile, as initiator. Alternatively, the graft rubber particles in component B can be prepared without addition of an initiator.

Preferably, the mechanical dewatering zone DZ comprises one or more elements from the group of screw elements, extruder shaft, barrels and liners of barrels, where at least one element is made of a stainless steel material, where the stainless steel material comprises more than 10 wt.-% of chrome (Cr), based on the stainless steel material. Preferably, the stainless steel material further comprises at least one metal or transition metal from the group consisting of vanadium (V), copper (Cu), nickel (Ni) and molybdenum (Mo).

More preferably, the sum of the weight of Cr and optionally V, Cu, Ni and/or Mo, in particular the sum of the weight of Cr and optionally V, Cu and/or Ni, comprised in the stainless steel material is more than 15 wt.-%, based on the total weight of the stainless steel material. Due to the harsh conditions in the mechanical dewatering zone DZ originating from the presence of aqueous salt solutions at high temperatures, the defined stainless steel material leads to longer life times of the extruder.

Preferably, sealings are arranged between the screw elements in the mechanical dewatering zone DZ.

The term weight of the molding composition corresponds to the weight of the produced thermoplastic ABS molding composition.

Examples for the at least one ABS-copolymer B, based on SAN-grafted polybutadiene are described, for example, in EP-A 0 258 741 and EP-A 062 901.

The at least one ABS-copolymer B (component B) can be constructed from: B1: 40 to 85 wt.-%, based on the dry weight of B, of the graft basis B1 obtainable by

(a) polymerizing: (B11): 0 to 21 wt.-%, based on the dry weight of B1, of at least one vinylaromatic monomer, in particular styrene, and B12: 79 to 100 wt.-%, based on the dry weight of B1, of one or more of butadiene or isoprene, where (B11) and (B12) sum to 100 wt.-%; and

(b) agglomerating component B1 by adding an agglomerating copolymer (BC): 0.01 to 5 wt.-% of component B1, in each case based on the solids content, corresponding to the dry weight, of the agglomerating copolymer (BC) of: (BC1): 80 to 99.9 wt.-% of one or more hydrophobic $C_1$ to $C_{12}$ alkyl acrylates or $C_1$ to $C_{12}$ alkyl methacrylates and (BC2): 0.1 to 20 wt.-% of one or more hydrophilic comonomers selected from the group consisting of methacrylamide, acrylamide, methylacrylamide, ethylacrylamide and n-butylacrylamide, where (BC1) and (BC2) sum to 100 wt.-%; and

B2: 15 to 60 wt.-%, based on the dry weight of B, of one or more graft stages obtainable by reacting the agglomerated component B1 with a mixture of: (B21) 70 to 90 wt.-%, based on the dry weight of B2, of styrene and/or $\alpha$-methylstyrene, in particular styrene, and (B22) 10 to 30 wt.-%, based on the dry weight of B2, of acrylonitrile and/or methyl methacrylate, in particular acrylonitrile, where component B1 and component B2 sum to 100 wt.-% in total.

The agglomerating copolymer (BC) has preferably a

(i) weight median particles size $D_{50}$ value of from 100 to 150 nm and

(ii) the agglomerated component B1 has preferably a bimodal particle size distribution of a fraction x) of non-agglomerated particles having a $D_{50}$ value of not more than 150 nm, preferably in the range of from 80 to 120 nm and a fraction y) of agglomerated particles having a $D_{50}$ value in the range of from 300 to 550 nm.

The weight median particle size $D_{50}$ is the diameter which divides the population exactly into two equal parts. 50% by weight of the particles are larger than the weight median particle size $D_{50}$ and 50% by weight are smaller. The particle size distribution, the weight mean average particle diameter DW and the weight median particle size $D_{50}$ value can be determined using an ultracentrifuge (for example as described in W. Scholtan, H. Lange: Kolloid Z. u. Z. Polymere 250, pp. 782 to 796 (1972)) or a disc centrifuge (for example DC 24000 by CPS Instruments Inc.). The weight mean average particle diameter DW (or De Broucker mean particle diameter) is an average size based on unit weight of particle. The definition for the weight mean average particle size diameter DW can be given as:

$$D_W = \text{sum} \left( n_i * D_i^4 \right) / \text{sum} \left( n_i * D_i^3 \right)$$

$n_i$: number of particles with the diameter $D_i$

See G. Lagaly, O. Schulz, R. Ziemehl: Dispersionen und Emulsionen: Eine Einführung in die Kolloidik feinverteilter Stoffe einschließlich der Tonminerale, Darmstadt: Steinkopf-Verlag 1997, ISBN 3-7985-1087-3, page 282, formula 8.3b. The summation is normally performed from the smallest to largest diameter of the particles size distribution. It should be mentioned that for a particles size distribution of particles with the same density the volume mean average particle size diameter DV is equal to the weight mean average particle size diameter DW.

Graft Basis B1

Component B12 employed may be for example isoprene and/or butadiene, preferably butadiene.

Component B11 employed may be alpha-methylstyrene and/or styrene, preferably only styrene.

The graft basis B1 generally employs component B12 in an amount of from 79 to 100 wt.-%, preferably 90 to 98 wt.-%, and component B11 in an amount of from 0 to 21 wt.-%, preferably 2 to 10 wt.-%.

Preference is given to a graft basis B1 composed of butadiene and styrene in the above-mentioned composition. B1 as graft basis has preferably a glass transition temperature of less than 0°C measured by dynamical mechanical analysis with an applied frequency of 1 Hz.

The graft basis B1 can be produced by polymerizing the components B12 and optionally B11 in aqueous emulsion according to processes known to those skilled in the art generally at temperatures of 20°C to 100°C, preferably 50°C to 90°C and at pressures between 0 and 18, preferably 0 and 15 bar (gauge pressure). The polymerization may employ customary emulsifiers such as alkali metal salts of alkyl- or arylsulfonic acids, alkyl sulfates, fatty alcohol sulfonates, salts of higher fatty acids comprising 10 to 30 carbon atoms or resin soaps. It is preferable to employ the sodium or potassium salts of alkylsulfonates or fatty acids comprising 10 to 18 carbon atoms. The emulsifiers are favorably employed in an amount of from 0.5 to 5 wt.-%, preferably from 0.5 to 2 wt.-%, based on the total weight of the monomers used for the graft basis B1. A water/monomer ratio of from 2:1 to 0.7:1 is generally employed.

Polymerization initiators employed are in particular the commonly used persulfates such as sodium or potassium peroxodisulfate, or mixtures thereof, though redox systems are also suitable. The amount of initiators, for example 0.1 to 1 wt.-%, based on the total weight of the monomers used for producing the graft basis B1, depends on the molar weight desired.

Polymerization assistants that may be employed include customary buffer substances used to adjust the pH to the preferred range of from 6 to 10, for example sodium bicarbonate, sodium carbonate and sodium pyrophosphate, or mixtures thereof and also generally 0.1 to 3 wt.-%, based on the total weight of the monomers used for producing the graft basis B1, of a molecular weight regulator such as mercaptan, e.g. tert.-dodecylmercaptan or n-dodecyclmercaptan, terpinol or dimeric $\alpha$-methylstyrene. The molecular weight regulators can be added at once at the beginning of the polymerization or in several portions at the beginning and/or during the polymerization or continuously from the beginning until the end of the polymerization with constant or variable feed rates.

The feeding time for the components B12 and optionally B11 is preferably at least 6 hours, more preferred 8 hours and preferably less than 20 hours, more preferred less than 16 hours. The solids content in the aqueous dispersion after the polymerization is preferably from 25 to 50 wt.-%, particularly preferably from 30 to 45 wt.-%.

The precise polymerization conditions, in particular type, feed modus and amount of the emulsifier are preferably selected within the abovementioned ranges such that the graft basis B1 has a $D_{50}$ value as defined herein below, as is described, for example, in DE102005022632, examples S11 to S13, or for example WO 2014/170406, examples A1 to A3.

The graft basis B1 preferably has a weight based average particles size $D_{50}$ value of not more than 150 nm, preferably in the range of from 50 to 150 nm, more preferably in the range of from 50 to 120 nm, even more preferably in the range of from 80 to 120 nm, particularly preferably in the range of from 80 to 110 nm. Preferably, less than 65 wt-%, of all grafted rubber particles have a particles size in the range of 50 to 150 nm. Small particle sizes enhance the biaxial impact strength of the thermoplastic ABS molding composition.

The polydispersity U of the particles size distribution which is defined in this context as $U = (D_{90} - D_{10})/D_{50}$ of the graft basis B1 is preferably less than 0.35, in particular less than 0.33. Preference is given to a graft basis B1 having a $D_{50}$ value in the range of from 80 to 120 nm and a polydispersity U of less than 0.35, in particular less than 0.33. $D_{10}$ and $D_{90}$ values are defined as follows: $D_{10}$ is the diameter at which 10 wt.-% of the particles are smaller than this value and $D_{90}$ is the diameter at which 90 wt.-% of the particles are smaller than this value.

Agglomerating Copolymer (BC)

Agglomeration of the graft basis B1 is preferably achieved by employing an agglomerating copolymer BC, a copolymer of (BC1) one or more hydrophobic $C_1$ to $C_{12}$ alkyl acrylates or $C_1$ to $C_{12}$ alkyl methacrylates and (BC2) one or more hydrophilic comonomers selected from the group consisting of methacrylamide, acrylamide, methylacrylamide, ethylacrylamide and n-butylacrylamide. The agglomerating component (BC) has preferably a $D_{50}$ value of from 100 to 150 nm.

The composition of the copolymer BC is generally as follows:

80 to 99.9, preferably 90 to 99.9 wt.-% of the component BC1 and
0.1 to 20, preferably 0.1 to 10 wt.-% of the component BC2,
where the sum of monomers BC1 and BC2 is precisely 100 wt.-%.

The monomers BC1 employed are preferably $C_1$-$C_4$ alkyl acrylates or mixtures thereof. The monomer BC1 is preferably ethyl acrylate. The monomer BC2 is preferably methacrylamide.

Preference is given to a copolymer BC of ethyl acrylate and methacrylamide. Particular preference is given to a copolymer BC of 92 to 98 wt.-%, based on the total applied monomers in BC, corresponding the sum of the dry weight of components BC1 and BC2, of ethyl acrylate and 2 to 8 wt.-%, based on the total applied monomers in BC, of methacrylamide. Very particular preference is given to a copolymer BC of 93 to 97 wt.-%, based on the total applied monomers in BC, of ethyl acrylate and 3 to 7 wt.-%, based on the total applied monomers in BC, of methacrylamide.

Preference is given to copolymers BC having a weight-average molar mass (Mw) of from 30,000 to 300,000 g/mol, measured by gel permeations chromatography (GPC) with tetrahydrofuran as solvent.

Particular preference is given to a copolymer BC described hereinabove and having a core constructed from at least one of the hydrophobic monomers cited as component BC1, preferably from ethyl acrylate, wherein this core is covered with a copolymer constructed from the components BC1 and BC2.

It is particularly preferable that the copolymer BC is constructed from (BC11) 5 to 20 wt.-%, based on the total amount of the copolymer BC, of one or more hydrophobic monomers (BC1), preferably ethyl acrylate, as the core and (BC12) 80 to 95 wt.-%, based on the total amount of the copolymer BC, of a shell polymerized onto the core and constructed from (BC121) 93 to 97 wt.-%, based on the total amount of the monomers forming the shell, of at least one hydrophobic monomer (BC1), preferably ethyl acrylate and (BC122) 3 to 7 wt.-%, based on the total amount of the monomers forming the shell, of at least one hydrophilic monomer (BC2), preferably methacrylamide.

It is very particularly preferable when the copolymer BC is constructed from (BC11) 8 to 12 wt.-%, based on the total amount of the copolymer BC, of ethyl acrylate as the core, and (BC12) 88 to 92 wt.-%, based on the total amount of the copolymer BC, of a shell polymerized onto the core and constructed from (BC121) 93 to 97 wt.-%, based on the total amount of the monomers forming the shell, of ethyl acrylate and (BC122) 3 to 7 wt.-%, based on the total amount of the monomers forming the shell, of methacrylamide.

Preference is accordingly given to a process for producing the agglomerating copolymer BC comprising monomer components BC1 and BC2, in particular ethyl acrylate and methacrylamide, said process comprising initially polymerizing a portion of BC1, in particular ethyl acrylate, (formation of the basis) and subsequently adding the remaining portion of BC1, in particular ethyl acrylate, and BC2, in particular methacrylamide, as a mixture. The portions correspond to the ratios described hereinabove.

The production of the agglomerating copolymer BC employed is carried out according to processes known to those skilled in the art, particularly advantageously by emulsion polymerization, and the emulsifiers cited hereinabove for the graft basis B1 may be employed. It is preferable to employ the sodium and potassium salts of alkylsulfonates comprising 10 to 18 carbon atoms. The emulsifiers are advantageously employed in an amount of from 0.5 to 5 wt.-%, preferably 0.5 to 2 wt.-%, based on the total monomer content of the copolymer BC.

Polymerization initiators employed are in particular the commonly used persulfates such as sodium or potassium peroxodisulfate, or mixtures thereof, though redox systems are also suitable. The amount of initiators, for example 0.1 to 1 wt.-%, based on the total weight of the monomers used for producing the copolymer BC, depends on the molar weight desired.

Polymerization assistants that may be employed include the customary buffer substances and/or basic substances used to adjust the pH to the preferred range of from 4 to 10. As buffer substances can be used for example sodium bicarbonate, sodium carbonate and sodium pyrophosphate, or mixtures thereof; as basic substances can be used for example sodium hydroxide, potassium hydroxide, or mixtures thereof. If desired molecular weight regulator such as mercaptan, e.g. tert.-dodecylmercaptan or n-dodecyclmercaptan, terpinol or dimeric $\alpha$-methylstyrene can be used. The molecular weight regulators can be added at once at the beginning of the polymerization or in several portions at the beginning and/or during the polymerization or continuously from the beginning until the end of the polymerization with constant or variable feed rates.

The copolymer BC can be produced by aqueous emulsion polymerization according to processes known to those skilled in the art generally at temperatures of 20°C to 100°C, preferably 50°C to 90°C and at pressures between 0 and 6, preferably 0 and 3 bar (gauge pressure). The solids content in the aqueous dispersion after the polymerization is preferably 3 to 60 wt.-%, more preferably from 7 to 50 wt.-%, particularly preferably from 10 to 45 wt.-%.

The process for producing the core/shell copolymers BC described hereinabove is an emulsion polymerization preferably comprising (or consisting of) the steps of: (x) emulsion polymerizing at least one monomer BC1 as defined hereinabove in a first step and (y) adding a monomer mixture comprising (or consisting of) monomers (BC1+BC2) in a further step, wherein the steps (x) and (y) are performed in the presence of at least one emulsifier which is employed in an amount of from 0.05 to 1.0 wt.-%, preferably 0.05 to 0.5 wt.-%, in step (x) and in an amount of from 0.45 to 4.5 wt.-%, preferably 0.45 to 1.8 wt.-%, in step (y), in each case based on the total monomer content.

The copolymer BC is preferably employed as an aqueous dispersion, as a so-called agglomeration latex. The agglomerating copolymer BC can have different values of the polydispersity U of the particles size distribution, e.g. the particles size distribution can be broad with values of polydispersity U larger than 0.27 or narrow with a polydispersity U of 0.27 or less. Preferably the polydispersity U is broad and in the range of larger than 0.27. In another embodiment preferably the polydispersity U is narrow and in the range of from 0.27 to 0.20, in particular in the range of from 0.25 to 0.21.

The agglomerating copolymer BC preferably has a $D_{50}$ value of from 110 to 150 nm, particularly preferably from 115 to 140 nm.

A preferred embodiment employs an agglomerating copolymer BC having a polydispersity U of 0.27 or less, in particular of less than 0.25, and a $D_{50}$ value of from 110 to 150 nm, in particular of 115 to 140 nm.

A further preferred embodiment employs an agglomerating copolymer BC having a polydispersity U in the range of from 0.27 to 0.20, in particular in the range of from 0.25 to 0.21, and a $D_{50}$ value of from 100 to 150, preferably 110 to 150 nm, in particular of 115 to 140 nm.

In the context of the present application, the abovementioned embodiments may be combined with one another.

Agglomeration of the Graft Basis B1

The agglomeration of the graft basis B1 is generally achieved by adding a dispersion of the copolymer BC described hereinabove. The concentration of the copolymer BC in the dispersion used for agglomeration shall generally be between 3 to 60 wt.-%, preferably between 7 to 50 wt.-%. The agglomeration generally employs from 0.1 to 5 wt.-%, preferably from 0.5 to 3 wt.-%, of the dispersion of the copolymer BC relating to the graft basis B1, in each case reckoned on solids.

The agglomeration is generally carried out at a temperature of from 20°C to 120°C, preferably from 30°C to 100°C, more preferably from 30°C to 75°C and at pressures between 0 and 6, preferably 0 and 3 bar (gauge pressure).

The addition of BC may be effected in one go or portion wise, continuously or with a feed profile over a particular time period. According to a preferred embodiment the addition of BC is effected such that 1/1 to 1/100 of the total amount of BC is introduced per minute. The agglomeration time, i.e. the time from the beginning of the addition of BC to the start of the subsequent graft copolymerization, is preferably from one minute to two or more hours, for example to 2 hours, particularly preferably from 10 to 60 minutes.

Basic electrolytes may optionally be added to the agglomeration in an amount of from 1 to 50 wt.-% (based on 100 wt.-% of the solids content of the copolymer BC). Useful basic electrolytes include organic or inorganic hydroxides. Inorganic hydroxides especially are useful. Particular preference is given to using lithium hydroxide, sodium hydroxide or potassium hydroxide. According to one of the particularly preferred embodiments KOH is used as the basic electrolyte. According to another preferred embodiment NaOH is used as the basic electrolyte. However, it is also possible to employ mixtures of two or more basic electrolytes.

This may be advantageous, for example, when the growth of the rubber particles is to be precisely controlled. Hence, it may be useful, for example, to employ mixtures of LiOH with KOH or mixtures of LiOH with NaOH. It is likewise possible to use mixtures of KOH and NaOH and this constitutes a further preferred embodiment. The electrolytes are generally dissolved prior to addition. A preferred solvent is the aqueous phase. Preference is given to using diluted solutions, for example solutions having a concentration in the range of from 0.001 to 0.1, in particular from 0.001 to 0.05, preferably less than 0.03, for example less than 0.025 g of basic electrolyte/ml of solvent. The addition of the basic electrolytes may be effected prior to the addition of copolymer BC, simultaneously therewith or separately therefrom or after addition of B1.

It is also possible to premix the basic electrolytes in the dispersion of BC. According to a preferred embodiment the addition of the basic electrolytes is effected prior to the addition of the agglomeration polymer BC. The basic electrolyte is generally employed in an amount in the range of from 0.01 to 4 wt.-%, preferably 0.05 to 2.5, in particular 0.1 to 1.5 wt.-% based on component B (solids).

The pH during the agglomeration is generally from 6 to 13. According to a preferred embodiment of the invention, the pH is from 8 to 13.

Agglomerated Graft Basis B1

The graft basis B1 obtained after the agglomeration has preferably a bimodal particle size distribution of fractions x) and y) where x) is a fraction of nonagglomerated particles and y) is a fraction of agglomerated particles having a $D_{50}$ value in the range of from 300 to 650 nm. In case that narrow sized agglomerating copolymer BC with a polydispersity U of 0.27 or less is used for the agglomeration, the polydispersity U of the agglomerated fraction is less than 0.28. The nonagglomerated particles of the fraction x) generally have a $D_{50}$ value of not more than 150 nm, preferably in the range of from 80 to 120 nm.

The weight fraction of the particles of the fraction x) of the agglomerated graft basis B1 is generally 15 to 40 wt.-%, preferably 20 to 30 wt.-%, and the fraction of the particles of the fraction y) is generally 60 to 85 wt.-%, preferably 70 to 80 wt.-%, based on the total mass of the particles, x) and y) generally summing to 100 wt.-%.

The agglomerated graft basis B1 preferably comprises a fraction y) of agglomerated particles having a $D_{50}$ value in the range of from 300 to 550 nm, particularly preferably 350 to 480 nm and in case that narrow sized agglomerating copolymer (C) with a polydispersity U of 0.27 or less is used, a polydispersity U of less than 0.27, in particular less than 0.26.

The obtained dispersion of the agglomerated graft basis B1 is relatively stable and may be readily stored and transported without onset of visible coagulation. The agglomerated graft basis B1 is used to produce ABS-copolymer B.

ABS-copolymer B

To produce the ABS-copolymer B (component B), the agglomerated graft basis B1 is polymerized with the monomers B21 and B22.

Component B generally comprises 40 to 85 wt.-%, based on the solids content of component B, of the graft basis (B1) and 15 to 60 wt.-%, based on the solids content of component B, of one or more graft stages B2 (component B2). B1 and B2 sum to 100 wt.-%.

Component B2 may be obtained by reaction of (B21) 70 to 90 wt.-%, preferably 75 to 85 wt.-%, of styrene and/or $\alpha$-methylstyrene, in particular styrene, and (B22) 10 to 30 wt.-%, preferably 15 to 25 wt.-%, of acrylonitrile, methacrylonitrile and/or methyl methacrylate, in particular acrylonitrile, in the presence of the agglomerated graft basis B1. B21 and B22 sum to 100 wt.-%. Preferred components B2 are constructed from: B21 copolymers of styrene and acrylonitrile, B22 copolymers of $\alpha$-methylstyrene and acrylonitrile. Particular preference is given to B21 copolymers of styrene and acrylonitrile. Particularly preferred components B2 are obtained by reaction of from 75 to 85 wt.-% of styrene and from 15 to 25 wt.-% of acrylonitrile.

Component B2 is preferably prepared by an emulsion polymerization process after performing the above described agglomeration of the graft basis B1.

The graft copolymerization for preparing component B2 may be performed in the same system as the emulsion polymerization for producing the graft basis B1 and further emulsifiers and assistants may be added if necessary. The monomer mixture to be polymerized onto the graft basis according to one embodiment may be added to the reaction mixture all at once, spread over a plurality of stages - for example to construct a plurality of graft superstrates - or in continuous fashion during the polymerization. The monomers B21 and B22 (in particular styrene and acrylonitrile) may preferably be added simultaneously with constant feed rates and with a constant ratio of the feed rates of B21 and B22. It is also preferable to use variable feed rates for the monomers B21 and B22 and variable ratios of the feed rates for the monomers B21 and B22 according to the teaching of the application WO 2015/165810 A1. In general, the time for feeding the monomers B21 and B22 is in the range of 1 to 10 hours, preferably in 1.5 to 6 hours.

In accordance with another embodiment, the component B2 is polymerized from a monomer mixture composed of the components B21 and B22, in particular styrene and acrylonitrile, in the presence of the agglomerated graft basis B1 obtained according to the above described process. The monomers may be added individually or in mixtures with one another. For example, it is possible to initially graft B21 alone and subsequently graft a mixture of B21 and B22. This graft copolymerization is advantageously again performed in aqueous emulsion under the customary conditions described hereinabove for the graft substrate.

Particulars pertaining to the performance of the graft reaction are known to those skilled in the art and are disclosed, for example, in DE-A 2427960, EP-A 0062901 or WO2014/170406 (see "Pfropfcopolymer B, Allgemeine Vorgehensweise", pp 34-35).

Preference is given to the following embodiments:

Component B is produced by polymerizing the components B21 and B22 in aqueous emulsion according to processes known to those skilled in the art generally at temperatures of 20°C to 100°C, preferably 50°C to 90°C and at pressures between 0 and 18, preferably 0 and 15 bar(g) (gauge pressure). The polymerization may employ the customary emulsifiers such as alkali metal salts of alkyl- or arylsulfonic acids, alkyl sulfates, fatty alcohol sulfonates, salts of higher fatty acids comprising 10 to 30 carbon atoms or resin soaps. It is preferable to employ the sodium or potassium salts of alkylsulfonates or fatty acids comprising 10 to 18 carbon atoms. The emulsifiers are favorably employed in an amount of from 0.1 to 3 wt.-%, preferably from 0.2 to 1 wt.-%, based on the total weight of component B.

Polymerization initiators employed are in particular the commonly used persulfates such as sodium or potassium peroxodisulfate, or mixtures thereof, though redox systems are also suitable. The amounts of initiators, for example 0.1 to 1 wt.-%, based on the total dry weight of component B, depends on the molar weight desired.

Polymerization assistants that may be employed include the customary buffer substances used to adjust the pH to the preferred range of from 6 to 10, for example sodium bicarbonate, sodium carbonate and sodium pyrophosphate, or mixtures thereof and also optionally 0.01 to 0.3 wt.-% of a molecular weight regulator such as mercaptan, e.g. tert.-dodecylmercaptan or n-dodecyclmercaptan, terpinol or dimeric $\alpha$-methylstyrene based on the total dry weight of component B.

The molecular weight regulators can be added at once at the beginning of the polymerization or in several portions at the beginning and/or during the polymerization or continuously from the beginning until the end of the polymerization with constant or variable feed rates.

The solids content in the aqueous dispersion after the polymerization is preferably from 25 to 50 wt.-%, particularly preferably from 30 to 45 wt.-%, based on the aqueous dispersion.

Preference is given to component B constructed from: B1: 40 to 85 wt.-%, based on the solids content, corresponding to the dry weight, of component B, of a graft basis B1 obtainable by (a) polymerizing:

(B11): 0 to 21 wt.-%, based on the graft basis B1, of styrene, and
(B12): 79 to 100 wt.-%, based on the graft basis B1, of butadiene,
where (B11) and (B12) sum to 100 wt.-%;
and (b) agglomerating the obtained graft basis B1 by adding (BC): 0.01 to 5 wt.-%, based on the graft basis B1, in each case based on the solids content, of an agglomerating copolymer (BC) of:

(BC1): 80 to 99.9 wt.-% of ethyl acrylate and
(BC2): 0.1 to 20 wt.-% of methacrylamide,
where (BC1) and (BC2) sum to 100 wt.-%; and
B2: 15 to 60 wt.-%, based on the solids content of component B, of component B2 obtainable by reacting the agglomerated graft basis B1 with a mixture of:

(B21) 70 to 90 wt.-%, based on component B2, of styrene, and
(B22) 10 to 30 wt.-%, based on component B2, of acrylonitrile, where the graft basis B1 and component B2 sum to 100 wt.-% in total; and where
the agglomerating copolymer (BC) has a $D_{50}$ value of from 100 to 150 nm, preferably of from 110 to 140 nm and a polydispersity U larger than 0.27 or of 0.27 or less, preferably less than 0.27, preferably in the range of from 0.26 to 0.20, and
the agglomerated graft basis B1 has a bimodal particle size distribution of a fraction x) of nonagglomerated particles in an amount of 15 to 40 wt.-%, having a $D_{50}$ value of not more than 150 nm, preferably in the range of from 80 to 120 nm and a fraction y) of agglomerated particles in an amount of 60 to 85 wt.-%, having a $D_{50}$ value in the range of from 300 to 550 nm, preferably with a polydispersity U of less than 0.28 and x) and y) generally summing to 100 wt.-%.

Components B may be further used as they are obtained in the reaction mixture, for example as a latex emulsion or latex dispersion. Alternatively, however, they may also be worked up in a further step. A stabilizer dispersion can be added to the component B before the workup measures take place.

Workup measures are known in principle to those skilled in the art. Examples of workup steps include the isolation of component B from the reaction mixture, for example by spray drying, shearing or by precipitation with strong acids or using other precipitants, for example from inorganic compounds such as magnesium sulfate. The solids content of the dispersion of component B is preferably about 40 wt.-%.

Preferably, component B is precipitated before being fed to the at least one extruder, in particular, separately or together with parts of one or several other components, in an aqueous precipitation step, wherein the aqueous composition used for precipitation contains less than 5.0 wt.-%, more preferred less than 4.0 wt.-%, even more preferred less than 3.5 wt.-% , for example 2.5 wt.-%, of salt(s), relating to the dry weight of component B. In general, a precipitation of component B is feasible with a bi-valent salt concentration (in a solution of 20 wt.-% B in water) between 0.3 and 0.7 wt.-% which corresponds to between 1.5 % and 3.5 wt.-% of salt per dry weight of component B.

Concentrations below these values can be applied e.g. for tri-valent salts. In a further embodiment the aqueous composition for precipitation comprises about 20 wt.-% solid content, (e.g. 18 to 22 %) wherein the solid is component B, and about 0.8 wt.-% of salt, what corresponds to 4 wt.-% of salt relating to the dry weight of the component B, in a solution with 20 wt.-% of solid content. Preferably, the salt used for the precipitation step is chosen from a group comprising anhydrous magnesium sulfate, magnesium sulfate with crystal water, anhydrous aluminium sulfate, aluminium sulfate with crystal water, calcium chloride, magnesium chloride, magnesium hydroxide and bi-valent salts and tri-valent salts, in particular magnesium and calcium, with sulphuric acid and combinations thereof.

Preferably, the thermoplastic ABS molding composition comprises less than 1 wt.-% of salt, based on the total weight of the thermoplastic ABS molding composition, wherein the salt is more preferably chosen from the group consisting of magnesium sulfate, aluminium sulfate, calcium chloride, magnesium chloride, magnesium hydroxide and bi-valent salts and tri-valent salts, in particular magnesium and calcium, with sulphuric acid and combinations thereof. Typically, the thermoplastic ABS molding composition comprises at least 0.03 wt.-% or rather at least 0.05 wt.-% of salt, based on the total weight of the thermoplastic ABS molding composition, wherein the salt is more preferably chosen from the group consisting of magnesium sulfate, aluminium sulfate, calcium chloride, magnesium chloride, magnesium hydroxide and bi-valent salts and tri-valent salts, in particular magnesium and calcium, with sulphuric acid and combinations thereof.

The aqueous precipitation step is preferably directly or indirectly followed by a sintering step, wherein the precipitated component B is agglomerated to larger particles, characterized by using a temperature from 100° to 125°C, preferred below 120 °C, more preferred below 115 °C and in other cases from 100° to 110 °C. In particular, the sintering step is effectuated at a pressure above atmospheric pressure. Component B can be treated in one or more sintering steps. In general, the residence time for the sintering step is 180 minutes or less, preferably less than 60 min and more preferably from 30 to 40 minutes. The total residence time for the precipitation step and the sintering step is preferably between 45 and 90 minutes, in particular about 60 minutes. In the precipitation step as well as in the sintering step, the water contains preferably between 15 wt.-% to 25 wt.-%, more preferably 18 wt.-% to 22 wt.-% of solid components, what mainly corresponds to the dry weight of component B.

In a preferred embodiment, component B is washed directly or indirectly after the sintering step with an amount of water, which corresponds to 1 to 90 wt.-%, more preferred 10 to 50 wt.-% of water, relating to the dry weight of component B. In a preferred embodiment, component B is washed with water after the sintering step and during and/or after a centrifugation step, whereas the amount of washing water is > 1 wt.-%, preferred >5 wt.-%, especially preferred >10 wt.-% based on total 100 % dry component B.

After the sintering step, the sintered component B is preferably treated in a further step to remove some of the water. Partial dewatering may be effected, for example, by filtration, settling out, pressing out, decanting, centrifugation or thermal drying. Preferably, one or more centrifugation steps are used. Component B is preferably partially dewatered to a residual water content of up to 60 wt.-%, often up to 40 wt.-% and component B containing residual water is fed to first feeding zone FZ1 of the extruder.

The first feeding zone FZ1 usually comprises automatic metering means and the actual metering orifice or a plurality of metering orifices.

The metering means are for example in the form of a conveying screw, which conveys or forces the conveyed material into the metering orifice. It is also possible for component B to be metered by suitable gravimetric or volumetric metering means and to be metered under gravity into the metering orifice of the extruder.

In a possible embodiment, a vent section VeS is located upstream in the direction opposite the conveying direction of the extruder. Typically, it has one or more vent orifices through which occluded air in component B can escape.

Preferably, the above-described component B is produced by:

(i) polymerizing the monomers B12 and B11 in aqueous emulsion to afford a particulate graft basis B1,
(ii) agglomerating the particulate graft basis B1 which is in the form of an emulsion using an agglomerating copolymer BC, wherein the copolymer BC has a polydispersity U larger than 0.27 or of 0.27 or less, preferably less than 0.27, preferably in the range of from 0.26 to 0.20 and a $D_{50}$ value of from 100 to 150 nm to afford an agglomerated particulate graft basis B1 and subsequently
(iii) polymerizing the monomers B21 and B22 of component B2 in aqueous emulsion in the presence of the agglomerated particulate graft basis B1. B, B12, B11, B1, BC, B21 and B22 are as defined above.

In accordance with the process, the particulate graft basis B1, in particular obtained in step i), generally has a $D_{50}$ value of not more than 150 nm, preferably of from 80 to 120 nm.

The thermoplastic ABS molding composition comprises component B and the at least one thermoplastic copolymer matrix A, one or more additives D and optionally one or more polymers C.

Preferably, the molding composition comprises (or consists of):

A: 30 to 80 wt.-% of at least one thermoplastic copolymer matrix A obtainable from: A1: 69 to 80 wt.-%, based on the dry weight of A, of styrene or α-methylstyrene or a mixture of styrene and α-methylstyrene and A2: 20 to 31 wt.-%, based on the dry weight of A, of acrylonitrile and

B: 19.99 to 60 wt.-% of component B; and

K: 0.01 to 40 wt.-% of further components K, comprising one or more additives D and optionally one or more polymers C,

where the components A, B and K sum to 100 wt.-%.

Copolymer Matrix A

The copolymer matrix A (component A) is preferably produced from the components acrylonitrile and styrene and/or α-methylstyrene by bulk polymerization or in the presence of one or more solvents. Preference is given to component A having weight-average molar masses Mw of from 50,000 to 300,000 g/mol, where the weight molar masses may be determined, for example, by means of GPC with tetrahydrofuran as solvent and with UV detection. Component A forms the matrix of the thermoplastic ABS molding composition. The number-averaged molar masses (Mn) of component A is preferably from 15,000 to 100,000 g/mol (determined by GPC with tetrahydrofuran as solvent and with UV detection). The viscosity of component A (determined according to DIN 53726:1983-09 at 25°C. in a 0.5 wt.-% solution in DMF) is, for example, from 50 to 120 ml/g.

Component A may in particular comprise or consist of:

(Aa) polystyrene-acrylonitrile, produced from, based on the dry weight of (Aa), 69 to 80 wt.-% of styrene and 20 to 31 wt.-% of acrylonitrile, or

(Ab) poly-α-methylstyrene-acrylonitrile, produced from, based on the dry weight of (Ab), 69 to 80 wt.-% of α-methylstyrene and 20 to 31 wt.-% of acrylonitrile, or

(Ac) a mixture of the copolymer matrix (Aa) and the copolymer matrix (Ab).

Component A may also be obtained by copolymerization of acrylonitrile, styrene and α-methylstyrene. However, it is also possible in principle to employ polymer matrices containing further monomer building blocks.

Component A may be produced by bulk polymerization/solution polymerization in, for example, toluene or ethylbenzene according to a process such as is described, for example, in Kunststoff-Handbuch, Vieweg-Daumiller, Vol V, (Polystyrol), Carl-Hanser-Verlag, Munich 1969, pages 122 f., lines 12 ff.

As previously described hereinabove component A is preferably a polystyrene-acrylonitrile, poly-α-methylstyrene-acrylonitrile or mixtures thereof. In a preferred embodiment after production component A is isolated according to processes known to those skilled in the art and preferably processed into pellets.

Further, the thermoplastic ABS molding composition can additionally comprise one or more further, in particular thermoplastic, polymers C selected from the group of polycarbonates, polyester carbonates, polyesters and polyamides. Suitable examples include, in particular, semicrystalline polyamides, semiaromatic copolyamides, polyesters, polyoxyalkylene, polyarylene sulfides, polyether ketones, polyvinyl chlorides, and/or polycarbonates.

Suitable polycarbonates are known per se. They are obtainable by interfacial polycondensation, for example by the processes of DE-B-1 300266, or by reacting diphenyl carbonate with bisphenols according to the process of DE-A-1495730.

Suitable polyamides are known homopolyamides, copolyamides and mixtures of such polyamides. They may be semi-crystalline and/or amorphous polyamides. Preferred polyamides are very generally those having an aliphatic semicrystalline or partly aromatic and amorphous structure of any type, and blends thereof. Appropriate products are available, for example, under the trade name Ultramid.RTM. (from BASF). Suitable semi-crystalline polyamides are polyamide-6, polyamide-6,6, mixtures thereof and corresponding copolymers of those components.

Suitable, in particular thermoplastic, polyesters are preferably polyalkylene terephthalates, that is to say reaction products of aromatic dicarboxylic acids or reactive derivatives thereof (e.g. dimethyl esters or anhydrides) and aliphatic, cycloaliphatic or arylaliphatic diols, and mixtures of such reaction products. Preferred polyalkylene terephthalates may be prepared from terephthalic acids (or reactive derivatives thereof) and aliphatic or cycloaliphatic diols having from 2 to 10 carbon atoms according to known methods (Kunststoff-Handbuch, Volume VIII, p. 695 ff, Carl Hanser Verlag, Munich 1973).

It is also possible to employ mixtures of two or more of the cited polymers C. The thermoplastic ABS molding composition may comprise, based on the thermoplastic ABS molding composition, from 0.1 to 40 wt.-%, preferably 0.1 to 30 wt.-%, particularly preferably 0.1 to 20 wt.-% of the abovementioned polymers C, also referred to as component C.

Preference is given to a thermoplastic ABS molding composition composed of component A, component B, component D and optionally component C.

As additives D, the thermoplastic molding compound may comprise in particular one or more components selected from the group consisting of dispersants, fillers and added substances.

As the component D, the thermoplastic ABS molding composition may further comprise 0.01 to 5 wt.-% of fibrous or particulate fillers or mixtures thereof, in each case based on the thermoplastic ABS molding composition. Examples of fillers or reinforcers that may be employed include glass fibers that may be finished with a sizing and a coupling agent, glass beads, mineral fibers, aluminum oxide fibers, mica, quartz flour or wollastonite. It is also possible to admix with the thermoplastic ABS molding composition metal flakes, metal powder, metal fibers, metal-coated fillers, for example nickel-coated glass fibers, and other additive substances that shield electromagnetic waves. It is also possible to add carbon fibers, carbon black, in particular conductivity carbon black, or nickel-coated carbon fibers.

Examples of fibrous/pulverulent fillers include carbon or glass fibers in the form of glass fabrics, glass mats, or filament glass rovings, chopped glass, glass beads, and wollastonite, particular preference being given to glass fibers. When glass fibers are used they may be finished with a sizing and a coupling agent to improve compatibility with the blend components. The glass fibers incorporated may either take the form of short glass fibers or else continuous filaments (rovings).

Examples of suitable particulate fillers include carbon black, amorphous silica, magnesium carbonate, powdered quartz, mica, bentonites, talc, feldspar or, in particular, calcium silicates, such as wollastonite, and kaolin.

Various additives, as or comprised in component D, may be added to the thermoplastic ABS molding composition in amounts of from 0.01 to 20 wt.-% as assistants and processing additives. Suitable additives include all substances customarily employed for processing or finishing the polymers.

Examples for component D include dyes, pigments, lubricants, colorants, antistatic agents, antioxidants, stabilizers for improving thermal stability, stabilizers for increasing photostability, stabilizers for enhancing hydrolysis resistance and chemical resistance, anti-thermal decomposition agents and in particular lubricants that are useful for production of molded bodies/articles. These additives may be in part admixed at any stage of the manufacturing operation, but preferably at an early stage in order to profit early on from the stabilizing effects (or other specific effects) of the additves. For further customary assistants and added substances, see, for example, "Plastics Additives Handbook", Hans Zweifel, 6th Edition, Hanser Publ., Munich, 2009.

Examples of suitable pigments include titanium dioxide, phthalocyanines, ultramarine blue, iron oxides or carbon black, and the entire class of organic pigments.

Examples of suitable colorants include all dyes that may be used for transparent, semitransparent, or non-transparent coloring of polymers, in particular those suitable for coloring styrene copolymers.

Examples of suitable flame retardants that may be used include the halogen-containing or phosphorus-containing compounds known to the person skilled in the art, magnesium hydroxide, and also other commonly used compounds, or mixtures thereof.

Examples of suitable antioxidants include sterically hindered monocyclic or polycyclic phenolic antioxidants, which may comprise various substitutions and may also be bridged by substituents. These include not only monomeric but also oligomeric compounds, which may be constructed of a plurality of phenolic units.

Hydroquinones and hydroquinone analogs are also suitable, as are substituted compounds, and also antioxidants based on tocopherols and derivatives thereof. It is also possible to use mixtures of different antioxidants. It is possible in principle to use any compounds which are customary in the trade or suitable for styrene copolymers, for example antioxidants from Irganox® range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

Examples of suitable light stabilizers, as or comprised in component D, include various substituted resorcinols, salicylates, benzotriazoles and benzophenones.

Suitable matting agents, as or comprised in component D, include not only inorganic substances such as talc, glass beads or metal carbonates (for example $MgCO_3$, $CaCO_3$) but also polymer particles, in particular spherical particles having diameters $D_{50}$ greater than 1 $\mu$m, based on, for example, methyl methacrylate, styrene compounds, acrylonitrile or mixtures thereof. It is further also possible to use polymers comprising copolymerized acidic and/or basic monomers.

Examples of suitable antidrip agents, as or comprised in component D, include polytetrafluoroethylene (Teflon) polymers and ultrahigh molecular weight polystyrene (weight-average molar mass Mw above 2,000,000 g/mol).

Examples of suitable antistatic agents include amine derivatives such as N,N-bis(hydroxyalkyl)alkylamines or -alkyleneamines, polyethylene glycol esters, copolymers of ethylene oxide glycol and propylene oxide glycol (in particular two-block or three-block copolymers of ethylene oxide blocks and propylene oxide blocks), and glycerol mono- and distearates, and mixtures thereof.

Examples of suitable stabilizers include hindered phenols but also vitamin E/compounds having analogous structures and butylated condensation products of p-cresol and dicyclopentadiene. HALS stabilizers (Hindered Amine Light Stabilizers), benzophenones, resorcinols, salicylates, benzotriazoles are also suitable. Other suitable compounds include, for example, thiocarboxylic esters.

Also usable are $C_6$-$C_{20}$-alkyl esters of thiopropionic acid, in particular the stearyl esters and lauryl esters. It is also possible to use the dilauryl ester of thiodipropionic acid (dilauryl thiodipropionate), the distearyl ester of thiodipropionic acid (distearyl thiodipropionate) or mixtures thereof. Examples of further additives include HALS absorbers, such as bis(2,2,6,6-tetramethyl-4-piperidyl) sebacate (Tinuvin 770) or UV absorbers such as 2H-benzotriazol-2-yl-(4-methylphenol). Such additives are typically used in amounts of from 0.01 to 2 wt.-%, based on the thermoplastic ABS molding composition.

Suitable lubricants and demolding agents, as or comprised in component D, include stearic acids, stearyl alcohol, stearic esters, amide waxes (bisstearylamide), polyolefin waxes and/or generally higher fatty acids, derivatives thereof and corresponding fatty acid mixtures comprising 12 to 30 carbon atoms. Also particularly suitable is ethylenebis-stearamide. The amounts of these additions are in the range of from 0.05 to 5 wt.-%, based on the thermoplastic ABS molding composition.

Also suitable additives are silicone oils, oligomeric isobutylene or similar substances. Typical amounts, when employed, are from 0.001 to 3 wt.-%, based on the thermoplastic ABS molding composition. Also usable are pigments, dyes, optical brighteners, such as ultramarine blue, phthalocyanines, titanium dioxide, cadmium sulfides, derivatives of perylenetetracarboxylic acid.

Processing assistants and stabilizers such as UV stabilizers, heat stabilizers (for example butylated reaction products of p-cresol and dicyclopentadiene, Wingstay L from Omnova, or else the dilauryl ester of thiodipropionic acid, Irganox PS 800 from BASF), lubricants and antistatic agents (for example ethylene oxide-propylene oxide copolymers such as Pluronic from BASF), when employed, are typically used in amounts of from 0.01 to 5 wt.-%, based on the thermoplastic ABS molding composition.

The individual added substances are generally used in the respective customary amounts.

Preferable, the components of the thermoplastic ABS molding composition are blended by melt mixing, by conjoint extrusion, kneading or rolling of the components.

This is preferably done at temperatures in the range of from 160°C to 400°C, more preferably from 180°C to 280°C. In a preferred embodiment, component B is first partially isolated from the aqueous dispersion obtained in the respective production steps.

In the at least one extruder, the drive power is converted to temperature increase and pressurization. An extruder usually comprises the following process zones: solids intake, melting (plastification), possibly further materials intake, dispersion, homogenization, devolatilization and discharge (see also "Aufbereiten von Polyolefinen", VDI-Verlag, 1984, pp.185 ff.).

For the production of the thermoplastic ABS molding composition, the at least one extruder in particular comprises and is preferably composed of the following sections or zones, preferably in downstream conveying direction:

the first feeding zone FZ1, in which component B and at least part of component D are fed to the at least one extruder;
optionally the preheating zone PZ, in which component B is heated to a temperature of 100°C or below;
the mechanical dewatering zone DZ, in which component B is mechanically dewatered at a dewatering temperature $T_{dw}$ in a range from 50°C to 200°C, preferably from 50°C to 180°C, more preferably from 50°C to 160°C, even more preferably from 50°C to 120°C, even more preferably from 50°C to 100°C, whereby the water content in component B is reduced preferably from more than 20 wt.-%, in particular more than 25 wt.-%, based on the total weight of component B, by preferably 10 wt.-% to 90 wt.-%, based on the water comprised in component B when fed to the first feeding zone FZ1,
the second feeding zone FZ2, in which at least part of component A and optionally part of component D are fed, preferably in melt and/or solid form, at least one zone of the extruder, where component A is brought in contact with component B;
the at least one degassing zone DG, in which component A and/or component B are degassed,
optionally the third feeding zone FZ3, in which part of component A, component C and/or part of component D are optionally fed to the extruder together or separately from one another; and
the discharge zone CZ, in which the thermoplastic ABS molding composition is removed from the extruder.

In the first feeding zone FZ1 solid is usually conveyed and compacted, and entrained air is also removed.

Further, the extruder can comprise at least one melting section S, where polymers are usually melted and fillers are usually predispersed. This can be followed by a melt-conveying zone, for example a distributive mixing zone, in which solids and fluids are distributed in the melt and the temperature of the composition is homogenized. In a dispersive mixing zone is it possible to disperse solid polymer particles and liquid droplets.

The at least one degassing zone DG serves in particular for the removal of water, residual monomers and solvents. In particular, air, water and/or volatile organic compounds (VOC) escape through the at least one degassing zone DG. In principle, high melt temperature, high rotation rate and optionally addition of entrainer (e.g. water), and application of a vacuum, serve to optimize degassing or devolatilization.

Preferably, at least one devolatilization aperture is present in each of the at least one degassing zone DG, in particular in each of the first degassing zone DG1 and the second degassing zone DG2, and more preferably has a suction-removal system utilizing the Venturi effect. It is preferable that the at least one devolatilization aperture is equipped with a retention screw. Retention screws, also known as stuffing screws, can prevent the escape of the thermoplastic ABS molding composition through the at least one devolatilization aperture. Other retention elements can also be used.

The at least one devolatilization aperture can be operated under atmospheric pressure, under vacuum or under superatmospheric pressure, respectively.

The discharge zone CZ usually comprises a pressure-increase zone, in order to generate the pressure needed in downstream assemblies such as filters.

Component A and optionally component C are preferably fed, preferably in melt and/or solid form, downstream of the first feeding zone FZ1 in conveying direction, in particular in the second feeding zone FZ2 and/or the third feeding zone FZ3, respectively. The at least one melting section S can be combined with at least one mixing section M in one section of the extruder.

Further, the extruder comprises at least one screw. In a preferred embodiment, the external diameter of the at least one screw is 30 mm to 230 mm, in particular 60 mm to 220 mm. A preferred rate of rotation of the at least one screw is 200 to 1500 rpm. The extruder preferably has two screws. The throughput of the thermoplastic ABS molding composition in the extruder is preferably 400 kg/h to 10 000 kg/h.

Some preferred embodiments of the process steps and the at least one extruder are described in US 6,165,399. In a preferred embodiment, the at least one extruder is a twin-screw extruder.

However, it is also possible to use an extruder having three or more screws or an extruder having a main screw of large diameter and, arranged around this, small screws (planetary arrangement). The screws of the at least one extruder, furthermore, preferably rotate in the same direction. However, rotation in opposite directions is also possible. Particular preference is given to a twin-screw extruder having screws rotating in the same direction.

Preferably, the screw elements of the at least one extruder have a flight depth ration $DS_{external}/DS_{internal}$ of from 1.2 to 1.8 and contain 3-flight, 2-flight, and 2-flight high volume elements. Depending on the type and amounts of the components of the composition, screws having a smaller flight depth or screws having a larger flight depth (ie. Deep-flighted screws) may be used in the extruder. Preference is given to the use of screws having a flight depth ration $DS_{external}/DS_{internal}$ of from 1.2 to 1.8, preferably from 1.4 to 1.6, and particularly preferably from 1.45 to 1.48. A commercially available embodiment of the extruder which is suitable for the production process of the thermoplastic ABS molding composition has, for example, a flight depth ratio of 1.55, ie. a large flight depth. In another embodiment, screws having a medium flight depth, particularly those having a flight depth ratio of from 1.4 to 1.48, are used.

This embodiment of the extruder is also commercially available and may be advantageous for certain components and certain amounts of the components. Screws with flight depth ratios of more than two are also suitable.

The thermoplastic ABS molding composition is preferably conveyed to a melt pump.

The absolute pressure of the thermoplastic ABS molding composition during conveying from the at least one degassing zone DG, in particular the last of the at least one degassing zone DG, to the melt pump is preferably below 40 bar, more preferably below 30 bar and in particular below 15 bar. Preferably, the at least one extruder comprises a gear pump and optionally at least one melt filter after the discharge zone CZ.

The use of a melt pump, of an extruder (ie. side extruder) or of a metering pump as a metering means for the components C and/or D is preferred. Preferably, the second feeding zone FZ2 and/or the third feeding zone FZ3 comprises at least one side extruder attached thereto.

The absolute pressure of the thermoplastic ABS molding composition is increased in the melt pump, preferably to at least 50 bar, more preferably to at least 65 bar and with particular preference to at least 70 bar.

The absolute pressure can be measured in each case by conventional pressure-measurement equipment. The method of checking can be based on direct measurement of the mechanical pressure or on measurement of the pressure on a membrane, a piezo element, a sensor, or other conventional components that are used by the person skilled in the art for checking pressure in technical systems.

The temperature of the ABS molding composition can be measured via a thermometer extending into the melt to a substantial depth within an adapter, and/or by using a commercially available insertion thermometer on the polymer strand.

In contrast to further extruder sections in which conveying elements are used to increase pressure, the melt pump which serves for pressure increase and for discharge of the thermoplastic ABS molding composition from the extruder is able to convey the thermoplastic ABS molding composition without any great additional temperature increase. The melt pump is preferably configured as gear pump.

During conveying from the degassing the temperature of the thermoplastic ABS molding composition is preferably below 300°C.

The temperature is preferably below 280°C and in particular below 265°C. The temperature of the thermoplastic ABS molding composition downstream of the at least one degassing zone DG, in particular downstream of the second degassing zone DG2, in conveying direction is usually at least 200°C.

The thermoplastic ABS molding composition can be conveyed from the at least one devolatilization aperture to the melt pump by way of at least one screw element and/or by way of an adapter. The adapter comprises no conveying elements and no mixing elements.

The thermoplastic ABS molding composition can be introduced from the at least one extruder, in particular from the melt pump, into a melt-pelletization procedure, in particular an underwater pelletization procedure. Appropriate devices are known. It is preferable that the thermoplastic ABS molding composition emerging from a pelletizing die or other die attached after the melt pump is cooled, whereupon the thermoplastic molding composition solidifies, and is optionally pelletized.

In particular, the molten thermoplastic ABS molding composition is pressed through a nozzle, preferably before and/or during pelletization.

Due to the pressure applied on the molten thermoplastic ABS molding composition, the grafted rubber particles comprised therein are compressed and deformed from a spherical into a rod-like form with an aspect ratio of more than 1. The deformation is maintained and preserved during solidification of the thermoplastic ABS molding composition.

To produce a molding, as product obtained by injection molding and/or extrusion, the pellets or granules are typically heated to a temperature in a range from 200°C to 250°C and thereby melted again. The mold temperature for solidifying the molding is preferably in a range from 40°C to 80°C.

The thermoplastic ABS molding composition can moreover be conveyed via at least one melt filter, in particular after the melt pump, in conveying direction. These filters are known to the person skilled in the art. The at least one melt filter can also be configured as melt sieve.

It is preferable that there is at least one melt filter arranged after the melt pump in conveying direction. It is preferable that the melt pump has connection to a device for the underwater pelletization procedure.

The invention further relates to a molding, granulate, foil and/or coating produced from the thermoplastic ABS molding composition.

Moreover, the invention relates to a use of the thermoplastic ABS molding composition for production of moldings, foils and/ or coatings, in particular by extrusion, thermoforming and/or injection molding.

The molding, granulate, foil and/or coating can be directly produced from the thermoplastic ABS molding composition. In one embodiment, granulates are produced from the thermoplastic ABS molding composition and the molding, foil and/or coating are produced from the granulates. Preferably, the molding, granulate, foil and/or coating comprises the grafted rubber particles with the aspect ratio of more than 1, more preferably at least 1.25 and even more preferably at least 1.5, in particular at least the granulate(s) comprise(s) the grafted rubber particles with the aspect ratio of more than 1, more preferably at least 1.25 and even more preferably at least 1.5.

In a preferred embodiment, the molding, granulate, foil and/or coating has a surface with particles of grafted rubber component B of the thermoplastic ABS molding composition, where the grafted rubber particles have an aspect ratio of more than 1, more preferably at least 1.25 and even more preferably at least 1.5, beneath the surface area in a distance from 0.01 to 10 $\mu$m to the surface area of the molding, granulate, foil and/or coating. Preferably, the surface, in particular the surface area, is formed by the thermoplastic ABS molding composition.

Typical moldings, also referred to as molded articles, are sheets, semi-finished products, fibers and foams.

Processing of the thermoplastic ABS molding composition to the molding, granulate, foil or coating may be carried out using the known processes for thermoplastic processing, in particular production may be effected by thermoforming, extruding, injection molding, calandaring, blow molding, compression molding, press sintering, deep drawing and/or sintering, preferably by injection molding.

The following example, figures and claims further describe the invention.

The figures show:

Figure 1    an extruder for the production of the thermoplastic ABS molding composition,

Figure 2    AFM-images of the surface of a thermoplastic ABS molding composition,

Figure 3    reflected interference contrast optical microscopy images of the surface of a thermoplastic ABS molding composition and

Figure 4    transmission electron microscopy pictures of the thermoplastic ABS molding composition.


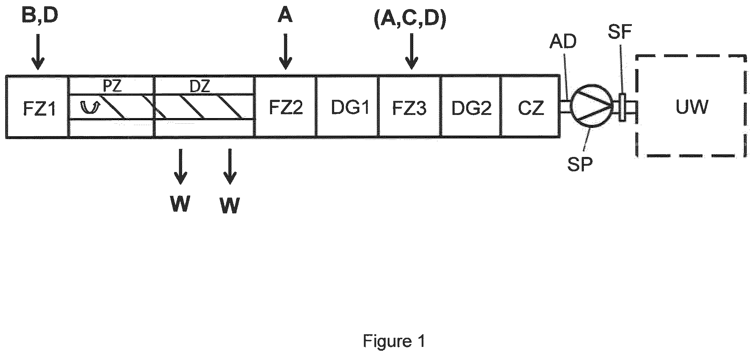

Figure 1 shows an extruder for the production of the thermoplastic ABS molding composition, comprising a first feeding zone FZ1, a preheating zone PZ, a mechanical dewatering zone DZ, a second feeding zone FZ2, two degassing zones DG1, DG2, a third feeding zone FZ3 and a discharge zone CZ and also a melt pump SP, which has an adapter AD. The preheating zone PZ is located upstream of the mechanical dewatering zone DZ and directly followed in conveying direction by the mechanical dewatering zone DZ. Further, there is a melt filter SF arranged after the melt pump SP in conveying direction, followed by a device for the underwater pelletization procedure UW.

Typically, component B and at least part of component D are fed to the first feeding zone FZ1, at least part of component A is fed to the second feeding zone FZ2 and optionally part of component A, component C and/or part of component D are fed to the third feeding zone FZ3. In the preheating zone PZ, component B is typically heated and in the mechanical dewatering zone DZ, water W is removed from component B.

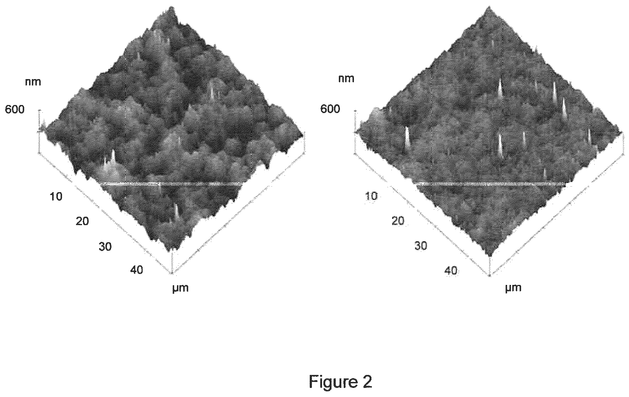

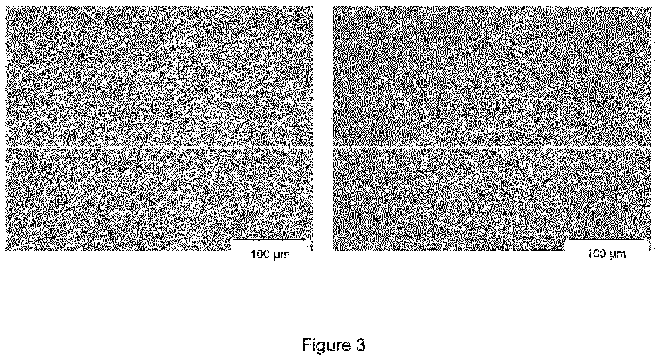

Figures 2 and 3 show AFM-images and reflected interference contrast optical microscopy images, respectively, of the surface of a thermoplastic ABS molding composition. Images of a first molding composition (left) and a second molding composition (right) are shown, wherein the two molding compositions differ in swelling index and gel content. The first molding composition had a swelling index of 42 and a gel content of 66 %. The second molding composition had a swelling index of 23 and a gel content of 85 % and showed an improved glossy surface.

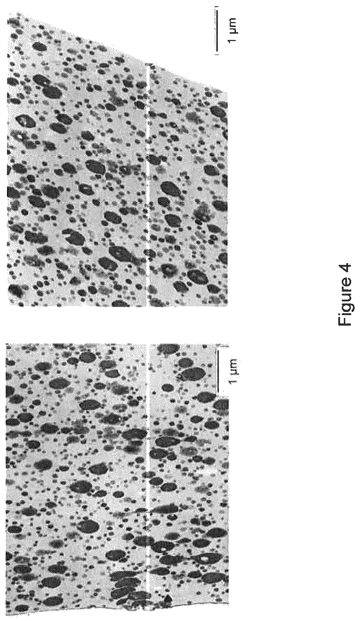

Figure 4 shows transmission electron microscopy pictures of the first and the second thermoplastic ABS molding composition, respectively. Ultra-thin sections had been contrasted with osmium tetroxide. A polybutadiene phase is represented in dark grey and a styrene-acylonitril phase of the grafted rubber and the matrix, respectively, is shown in light grey. It is apparent that the aspect ratio is >1 and <3.

The invention is further illustrated by the examples, figures and claims.

Example

Component A is polymerized based on 20.5 wt.-% acrylonitrile, 64.5 wt.-% styrene and 15 wt.-% ethyl-benzene (EB), based on the applied amounts of acrylonitrile, styrene and ethyl-benzene. A reaction temperature of 163°C, a pressure of 2.4 bar gauge and a residence time of 2.3 h are used in the reactor. Non reacted monomers and EB are removed from the reaction mixture by degassing to obtain component A having a polymerized composition comprising 76 wt.-% of styrene and 24 wt.-% of acrylonitrile, based on the total weight of component A, and a viscosity number of 64 dl/g.

The degassing is performed using a tube bundle heat exchanger.

The base rubber component B1 is produced by emulsion polymerization using a feed stream addition process. The monomers are introduced into the reactor in the following order: Demineralized water, potassium stearate, potassium persulfate and sodium hydrogencarbonate are provided first and the temperature is set to 67°C. Initially, styrene is added in an amount of 7 wt.-%, based on the total monomer amount, over 20 minutes. Following the styrene addition, a first portion of 1,3-butadiene is added in an amount of 7 wt.-%, based on the total monomer amount, over 25 minutes. The remaining portion of 1,3-butadiene which amounts to 86 wt.-%, based on the total monomer amount, is subsequently added over 8.5 hours. tert.-Dodecylmercaptane is added in an amount of 41 wt.-% based on the total amount of tert.-Dodecylmercaptane at the start of the first portion of 1,3-butadiene, another amount of 41 wt.-% is added after 4 hours after start of styrene feed and 18 wt.-% is added after 8 hours after start of styrene feed.

The applied amounts are: 3180 parts styrene, 4693 parts 1,3-butadiene (first portion), 37554 parts 1,3-butadiene (second, remaining portion), 454 parts tert.-Dodecylmercap-tane), 111.9 parts potassium persulfate, 338 parts potassium stearate and 159.5 parts sodium hydrogencarbonate. After the end of the feeding of the second, remaining portion of 1,3-butadiene, a temperature of 67°C and a maximum pressure of 7.8 bar are applied for a residence time of 2 h. The pressure is then released to 2.5 bar and an amount of 1900 parts 1,3-butadiene is distilled of by reducing the pressure from 2.5 bar to 0.4 bar and the distilled 1,3-butadiene is recovered and introduced into the next polymerization batch. The final latex B1 has a solid content of 44.0 to 45.0 wt-%, based on the total weight of component B1.

Component B1 showed a weight based particle size $D_{50}$ of 109.9 $\pm$ 6.9 nm, a swelling index of 26.7 $\pm$ 4.2 and gel content of 76.7 $\pm$ 3.4.

The agglomerating copolymer is produced by emulsion polymerization. First, 62.0 parts of Mersolat H30 (Lanxess Deutschland GmbH, emulsifier, $C_{12}$-$C_{18}$-$SO_3$-$K^+$, CAS Registry Number: 68188-18-1, solids content 30.0 wt-%) are dissolved in 7280.8 parts of demineralized water and heated to 60°C with stirring under a nitrogen atmosphere. 1428.0 parts of a sodium persulfate solution with 3.0 wt-% in demineralized water is added to this solution with continued stirring. After 15 minutes, 1397 parts of ethyl acrylate are introduced over 18 minutes with a concomitant temperature increase from 60°C to 80°C.

The following three feeds are then introduced over 180 minutes:

a) 11101.6 parts of ethyl acrylate

b) 1.1277 parts of sodium persulfate as 3 wt-% solution in demineralized water

c) solution of 549.6 parts of Mersolat H30 (Lanxess Deutschland GmbH) and 549.6 parts of methacrylamide in 6458.9 parts of demineralized water.

Once addition of the feeds a) to c) is completed the polymerization is continued for 60 minutes at 80°C with stirring. This is followed by cooling to room temperature and addition of 2800 parts of demineralized water. The solids content of the latex of the agglomerating copolymer BC1 is 40.5 wt.-%. The weight mean average particle diameter is 118 to 124 nm. The polydispersity U is in the range of 0.21 to 0.25.

The agglomerated graft basis B1 is produced according to the following procedure. First, 46025.9 parts of the latex of the graft basis B1, based on the solids content of the latex, are initially charged at a temperature of 68°C and stirred. 1118 parts of the latex of the agglomerating copolymer (BC) (based on the latex solids) are diluted with 7988.2 parts of demineralized water. This diluted latex is then added over 25 minutes with stirring to agglomerate the graft basis B1. After five minutes 419.4 parts of potassium stearate dissolved in demineralized water and further demineralized water (total amount in: 31969 parts) having a temperature of 68°C is added to the agglomerated latex of the graft basis B1 with continued stirring.

The particle size distribution of the agglomerated graft basis B1 is measured. Only a fraction of the particles in the latex of the graft base B1 is agglomerated to larger particles.

The agglomeration yield is the fraction of the agglomerated particles in wt.-% based on the total amount of the particles. The agglomeration yield is determined from the cumulative distribution curve of the particle size measurement. The weight median particle size $D_{50}$ of the fraction of agglomerated particles (=fraction y) in the obtained agglomerated latex of the graft base B is determined: $D_{50}$: 340 to 360 nm, fraction y: 60 to 80 wt.-%.

Once the agglomeration step is completed 54.5 parts of potassium persulfate dissolved in 2442 parts of demineralized water are added to the agglomerated latex of the graft basis B1 at 68°C with continued stirring. A monomer mixture of 24228 parts of styrene and 6057 parts of acrylonitrile are added over two hours and 44 minutes while stirring is continued. The temperature is increased to 80°C over this time period of addition of the styrene/acrylonitrile mixture. Once the addition of the styrene/acrylonitrile mixture is complete 54.5 parts of potassium persulfate dissolved in 2442 parts of demineralized water are added under continued stirring. The polymerization is continued for 80 minutes at 80°C and then 72.9 parts dispersion of a stabilizer (Wingstay L, Phenol, 4-methyl-, reaction products with dicyclopentadiene and isobutene, CAS No.: 68610-51-5, based on solids of the dispersion having a solids content of 50 wt.-%) are added to the obtained graft latex with a solid content of 39.0 to 41.5 wt.-%.

The term parts is based on weight in the context of the present application. The process can be used at a large scale.

Component B2 showed a bimodal particle size distribution with a particle size $D_{50}$ (small) of $131.0 \pm 13.5$ nm and a particle size $D_{50}$ (large) of $346.9 \pm 42.8$ nm.

The latex of component B was then precipitated in a continuous process with an aqueous magnesium sulfate solution at a temperature of 88°C in a first stirred reactor, sintered at a temperature of 110°C in a second stirred reactor and centrifuged at up to 1.800 rpm, resulting in a water content of 25.8 to 29.6 wt.-% based on the total weight of component B.

Subsequently, component B was fed to an extruder (ZSK 133 SC from Coperion) and mixed with component A, resulting in a thermoplastic ABS molding composition. The setup of the extruder (ZSK 133 SC from Coperion) was as shown in figure 1.

The thermoplastic ABS molding composition showed a flowability MVR (220°C) of $18.7 \pm 2.0$ ml/10 min, a charpy notched impact strength of $22.5 \pm 2.0$ kJ/m$^2$, a Vicat S.T (B/50) of $97 \pm 1.$ °C and a yellowness index (on granules) of $16.1 \pm 2.0$. As shown in figure 4, the aspect ratio of a thermoplastic ABS molding composition of the present invention was in a range of >1 and <3.

Further, the thermoplastic ABS molding composition only comprised residual monomers in total of 450 to 1100 ppm, based on the total weight of the thermoplastic ABS molding composition, and more specific 350 to 900 ppm styrene and 75 to 200 ppm ethyl-benzene.

The test extruder was equipped with two main shafts made out of stainless steel material, namely stainless steel AISI 630 (DIN EN 10088-3:2014-12 1.4542). In the preheating zone PZ four 45° kneading blocks, each of them 60 mm long, were used. The preheating zone DZ had two dewatering apertures to remove liquid water.

1.7 t/h of wet component B, having a water content of 26 wt.-%, based on the total weight of component B, comprising water and the dry weight of B, and a first part of component D (2.5 kg/h) were fed to the first feeding zone FZ1. 0.7 t/h of component A were fed to the second feeding zone FZ2. 1.46 t/h of component A and the remaining part of D (6.5 kg/h) were fed to the third feeding zone FZ3.

At a first dewatering aperture in the mechanical dewatering zone DZ, a temperature of 85°C of the mixture of B and D in the extruder was measured. At a second dewatering aperture in the mechanical dewatering zone DZ, a temperature of 140°C was measured. At the first dewatering aperture 110 l/h of water were released, at the second dewatering aperture 147 l/h water were released.

From the thermoplastic ABS molding composition different types of granulates, moldings, foils and coatings are produced, which have advantageous properties.

The analytical methods used to characterize the polymers are briefly summarized:

a) Charpy notched impact strength [kJ/m$^2$]:

The notched impact strength is determined on test specimens (80×10×4 mm, produced by injection molding at a compound temperature of 240°C and a mold temperature of 70°C) at 23°C according to ISO 179-1:2010-11.

b) Flowability (MVR [ml/10 min]):

The flowability is determined on a polymer melt at 220°C with a load of 10 kg according to ISO 1133-1:2012-03.

c) Particle size [nm]:

The weight mean average particle diameter DW of the rubber dispersions of the graft basis B1 and the agglomerated graft basis B1 was measured using a CPS Instruments Inc. DC 24000 disc centrifuge. Measurement was performed in 17.1 ml of an aqueous sugar solution with a sucrose density gradient of from 8 to 20 wt.-% to achieve stable flotation behavior of the particles. A polybutadiene latex having a narrow distribution and an average particle size of 405 nm was used for calibration. The measurements were taken at a disk rotational speed of 24 000 rpm by injection of 0.1 ml of a diluted rubber dispersion (aqueous 24 wt.-% sucrose solution, comprising about 0.2-2 wt.-% of rubber particles) into the disc centrifuge containing the aqueous sugar solution having a sucrose density gradient of from 8 to 20 wt.-%.

The weight mean average particle diameter DW of the agglomerating copolymer (BC) was measured with the CPS Instruments Inc. DC 24000 disc centrifuge using 17.1 ml of an aqueous sugar solution having a sucrose density gradient of from 3.5 to 15.5 wt.-% to achieve stable sedimentation behavior of the particles. A polyurethane latex (particle density 1.098 g/ml) having a narrow distribution and an average particle size of 155 nm was used for calibration. The measurements were taken at a disk rotational speed of 24 000 rpm by injection of 0.1 ml of a diluted dispersion of the copolymer BC (produced by diluting with water to a content of 1-2%) into the disk centrifuge containing the aqueous sugar solution having a sucrose density gradient of from 3.5 to 15.5 wt.-%.

The weight mean average particle diameter DW was calculated using the formula:

$$DW = \text{sum} ( ni * Di^4 ) / \text{sum} ( ni * Di^3 )$$

ni: number of particles with the diameter Di

d) The solids contents were measured after drying the samples at 180°C for 25 min in a drying cabinet.

e) Swelling index QI and gel content [%]:

The gel content and swelling index values were determined with the wire cage method in toluene (see Houben-Weyl, Methoden der Organischen Chemie, Makromolekulare Stoffe, part 1, page 307 (1961) Thieme Verlag Stuttgart).

A film was produced from the aqueous dispersion of the graft substrate by evaporation of the water. 0.2 g of this film was admixed with 50 g of toluene. After 24 hours, the toluene was removed from the swelled sample and the sample was weighed. After 16 hours of drying in vacuum at 110° C the sample was weighed again.

The swell index is determined by:

$$\text{Swelling index QI} = (\text{Swelled gel with toluene prior to drying}) / (\text{gel after drying})$$

The gel content is determined by:

Gel content = (mass of sample dried in vacuum)/(weight of sample prior to swelling) * 100%

f) Gloss characteristics

To determine the gloss characteristics rectangular platelets having dimensions of 60 mm×40 mm×2 mm are produced from the polymer melt using an injection molding machine at a compound temperature of 240°C and a mold temperature of 70°C.

The surface gloss is measured by reflectance measurement according to DIN 67530:1982-01 at an angle of 20°.

g) Yellowness index YI

The YI value was determined on platelets having dimensions of 60×40×2 mm and produced by injection molding at a compound temperature of 240°C and a mold temperature of 70°C according to ASTM method E313-96 (illuminant/observer combination C/2°).

**Claims**

1. A thermoplastic ABS molding composition, comprising

    30 - 80 wt.-%, based on the weight of the molding composition, of at least one thermoplastic copolymer matrix A, with components based on the dry weight of A:

    A1: 50 - 80 wt.-% of styrene and/or $\alpha$-methylstyrene and/or p-methyl-styrene
    A2: 20 - 40 wt.-% of (meth)acrylonitrile
    A3: 0 - 20 wt.-% of one or more co-polymerizable monomers, preferably $C_1$-$C_8$-acrylates and/or methyl-methacrylate,

    19.99 - 60 wt.-%, based on the weight of the molding composition, of at least one ABS-copolymer B, with components based on the dry weight of B:

    B1: 30 - 90 wt.-% of one or more rubber component(s) as graft basis, having a glass transition temperature of less than 0°C, made from, based on the dry weight of B1,

    B11: 50 - 100 wt.-% of one or more of butadiene or isoprene, and
    B12: optionally, 0 - 50 wt.-% of further monomers, in particular from the group of styrene, methyl methacrylate, DCPA, butanediol diacrylate, ethylene glycol diacryate and tris-allyl-cyanurate, preferably styrene,

    B2: 10 - 70 wt.-% of one or more graft stages, polymerized after the graft basis, with, based on the dry weight of B2,

    B21: 50 - 90 wt.-% of styrene, $\alpha$-methylstyrene and/or p-methyl-styrene,
    B22: 5 - 40 wt.- % of (meth)acrylonitrile,
    B21: 0 - 40 wt.-% of one or more co-polymerizable monomers, preferably $C_1$-$C_8$-acrylates and/or methyl-methacrylate,

    0 - 40 wt.-%, in particular 0 - 20 wt.-%, based on the weight of the molding composition, of one or more polymers C selected from the group of polycarbonates, polyesters, polyester carbonates and polyamides,
    0.01 - 20 wt.-%, in particular 0.3 - 5 wt.-%, based on the weight of the molding composition, of one or more additives D, in particular from the group of thermal stabilizers, UV stabilizers, dispersants, pigments, lubricants, dyestuff, colorants, inorganic fillers and organic fillers,
    wherein, in the thermoplastic ABS molding composition, in particular after thermoplastic processing by extrusion, thermoforming and/or injection molding, the grafted rubber of component B is present in form of small particles with a weight based average particles size, determined using an ultracentrifuge or a disc centrifuge, of 50 to 950 nm, in particular 80 to 600 nm, and wherein 10 to 90 wt.-%, in particular 30 to 90 wt.-% of the grafted rubber particles have an aspect ratio, determined by transmission electron microscopy (TEM) images by measuring the longest and shortest axes, of more than 1, in particular at least 1.25.

2. The thermoplastic ABS molding composition according to claim 1, where the weight-based particle size distribution, determined using an ultracentrifuge or a disc centrifuge, of the grafted rubber particles of component B is for >90 wt.-% of all grafted rubber particles in the range of 50 to 950 nm, and wherein 10 to 90 wt.-%, in particular 30 to 90 wt.-% of the grafted rubber particles have an aspect ratio of more than 1, preferably at least 1.25 and even more preferably at least 1.5 in a surface area from 0.01 to 10 $\mu$m beneath the surface of the thermoplastic ABS molding composition.

3. The thermoplastic ABS molding composition according to claim 1 or 2, where the particles of component B have a bimodal weight-based particle size distribution for particles <70 wt.-%, preferably <65 wt.-%, of all grafted rubber particles in the range of 50 to 150 nm.

4. The thermoplastic ABS molding composition according to one or more of claims 1 to 3, where component A has a content of acrylonitrile of less than 40 wt.-%, more preferably less than 36 wt.-%, based on the weight of component A, and the rubber B1 of component B is made of butadiene or of butadiene and styrene.

5. The thermoplastic ABS molding composition according to one or more of claims 1 to 4, where the particles of component B have a bimodal weight-based particle size distribution and the rubber B1 is made from butadiene and 1 to 20 wt.-%, based on the weight of the rubber B1, of further monomers, in particular from the group of styrene, methyl methacrylate, DCPA, butanediol diacrylate, ethylene glycol diacryate and tris-allyl-cyanurate, preferably styrene.

6. The thermoplastic ABS molding composition according to one or more of claims 1 to 5, where the thermoplastic ABS molding composition comprises less than 1 wt.-% of salt, based on the total weight of the thermoplastic ABS molding composition, wherein the salt is preferably chosen from the group consisting of magnesium sulfate, aluminium sulfate, calcium chloride, magnesium chloride, magnesium hydroxide and bi-valent salts and tri-valent salts, in particular magnesium and calcium, with sulphuric acid and combinations thereof.

7. The thermoplastic ABS molding composition according to one or more of claims 1 to 6, where graft basis B1 particles in component B have a gel content, determined according to the method described in the specification, of more than 66%, preferably more than 68%, more preferably more than 70%.

8. The thermoplastic ABS molding composition according to one or more of claims 1 to 7, where the graft basis B1 particles in component B have a swelling index, determined according to the method described in the specification, of less than 42, preferably less than 40, more preferably less than 38.

9. The thermoplastic ABS molding composition according to one or more of claims 1 to 8, where the thermoplastic ABS molding composition has a yellowness index YI, determined according to the method described in the specification, of 20 or less at a mold temperature of 260°C.

10. The thermoplastic ABS molding composition according to one or more of claims 1 to 9, where at least 40 wt.-% of the grafted rubber particles of component B have an aspect ratio of more than 1, preferably at least 1.25 and even more preferably at least 1.5, based on the total weight of component B comprised in the thermoplastic ABS molding composition.

11. The thermoplastic ABS molding composition according to one or more of claims 1 to 10, where the grafted rubber particles of component B have an ellipsoid shape and whereby the aspect ratio is the ratio between a largest diameter and a smallest diameter of the ellipsoid.

12. A molding, granulate, foil and/or coating produced from a thermoplastic ABS molding composition according to one or more of claims 1 to 11.

13. The molding, granulate, foil and/or coating according to claim 12, where the molding, granulate, foil and/or coating has a surface with particles of grafted rubber component B of the thermoplastic ABS molding composition, where the grafted rubber particles have an aspect ratio of more than 1, preferably at least 1.25 and even more preferably at least 1.5, beneath the surface area in a distance from 0.01 to 10 $\mu$m to the surface area of the molding, granulate, foil or coating.

14. The molding, granulate, foil and/or coating according to claim 13, where the surface is formed by the thermoplastic ABS molding composition.

15. Use of the thermoplastic ABS molding composition according to one or more of claims 1 to 11 for production of moldings, granulates, foils and/or coatings, in particular by extrusion, thermoforming and/or injection molding.

## Patentansprüche

1. Thermoplastische ABS-Formmasse, umfassend

30-80 Gew.-%, bezogen auf das Gewicht der Formmasse, mindestens einer thermoplastischen Copolymermatrix A, mit Anteilen bezogen auf das Trockengewicht von A:

A1: 50-80 Gew.-% Styrol und/oder $\alpha$-Methylstyrol und/oder p-Methylstyrol
A2: 20-40 Gew.-% (Meth)acrylnitril
A3: 0-20 Gew.-% eines oder mehrerer copolymerisierbarer Monomere, vorzugsweise $C_1$-$C_8$-Acrylate und/oder Methyl-Methacrylat,

19,99-60 Gew.-%, bezogen auf das Gewicht der Formmasse, mindestens eines ABS-Copolymers B, mit Anteilen bezogen auf das Trockengewicht von B:

B1: 30-90 Gew.-% einer oder mehrerer Kautschukkomponente(n) als Pfropfgrundlage, mit einer Glasübergangstemperatur von weniger als 0 °C, hergestellt aus, bezogen auf das Trockengewicht von B1,

B11: 50-100 Gew.-% eines oder mehrerer aus Butadien oder Isopren, und
B12: gegebenenfalls 0-50 Gew.-% weiterer Monomere, insbesondere aus der Gruppe von Styrol, Methylmethacrylat, DCPA, Butandioldiacrylat, Ethylenglykoldiacrylat und Tris-Allyl-Cyanurat, vorzugsweise Styrol,

B2: 10-70 Gew.-% einer oder mehrerer Pfropfstufen, polymerisiert nach der Pfropfgrundlage, mit, bezogen auf das Trockengewicht von B2,

B21: 50-90 Gew.-% Styrol, $\alpha$-Methylstyrol und/oder p-Methylstyrol,
B22: 5-40 Gew.-% (Meth)acrylnitril,
B21: 0-40 Gew.-% eines oder mehrerer copolymerisierbarer Monomere, vorzugsweise $C_1$-$C_8$-Acrylate und/oder Methyl-Methacrylat,

0-40 Gew.-%, insbesondere 0-20 Gew.-%, bezogen auf das Gewicht der Formmasse, eines oder mehrerer Polymere C, ausgewählt aus der Gruppe der Polycarbonate, Polyester, Polyestercarbonate und Polyamide,
0,01-20 Gew.-%, insbesondere 0,3-5 Gew.-%, bezogen auf das Gewicht der Formmasse, eines oder mehrerer Zusatzstoffe D, insbesondere aus der Gruppe der Thermostabilisatoren, UV-Stabilisatoren, Dispergiermittel, Pigmente, Gleitmittel, Farbstoffe, anorganischen Füllstoffe und organischen Füllstoffe,
wobei in der thermoplastischen ABS-Formmasse, insbesondere nach thermoplastischer Verarbeitung durch Extrusion, Thermoformen und/oder Spritzgießen, der Pfropfkautschuk der Komponente B in Form von kleinen Teilchen mit einer gewichtsbezogenen mittleren Teilchengröße, bestimmt mit einer Ultrazentrifuge oder einer Scheibenzentrifuge, von 50 bis 950 nm, insbesondere 80 bis 600 nm, vorliegt, und wobei 10 bis 90 Gew.-%, insbesondere 30 bis 90 Gew.-%, der gepfropften Kautschukpartikel ein Aspektverhältnis, bestimmt durch Transmissionselektronenmikroskopie (TEM)-Aufnahmen durch Messung der längsten und kürzesten Achsen, von mehr als 1, insbesondere mindestens 1,25, aufweisen.

2. Thermoplastische ABS-Formmasse nach Anspruch 1, wobei die gewichtsbezogene, mittels Ultrazentrifuge oder Scheibenzentrifuge ermittelte, Teilchengrößenverteilung der gepfropften Kautschukteilchen der Komponente B für > 90 Gew.-% aller gepfropften Kautschukteilchen im Bereich von 50 bis 950 nm liegt, und wobei 10 bis 90 Gew.-%, insbesondere 30 bis 90 Gew.-%, der gepfropften Kautschukteilchen ein Aspektverhältnis von mehr als 1, vorzugsweise mindestens 1,25 und noch stärker bevorzugt mindestens 1,5, in einem Oberflächenbereich von 0,01 bis 10 $\mu$m unterhalb der Oberfläche der thermoplastischen ABS-Formmasse aufweisen.

3. Thermoplastische ABS-Formmasse nach Anspruch 1 oder 2, wobei die Teilchen der Komponente B eine bimodale gewichtsbezogene Teilchengrößenverteilung für Teilchen < 70 Gew.-%, vorzugsweise < 65 Gew.-%, aller Pfropfkautschukpartikel im Bereich von 50 bis 150 nm aufweisen.

4. Thermoplastische ABS-Formmasse nach einem oder mehreren der Ansprüche 1 bis 3, wobei die Komponente A einen Gehalt an Acrylnitril von weniger als 40 Gew.-%, stärker bevorzugt weniger als 36 Gew.-%, bezogen auf das Gewicht der Komponente A, aufweist und der Kautschuk B1 der Komponente B aus Butadien oder aus Butadien und Styrol besteht.

5. Thermoplastische ABS-Formmasse nach einem oder mehreren der Ansprüche 1 bis 4, wobei die Teilchen der Komponente B eine bimodale gewichtsbezogene Teilchengrößenverteilung aufweisen und der Kautschuk B1 aus Butadien und 1 bis 20 Gew.-%, bezogen auf das Gewicht des Kautschuks B1, weiterer Monomere, insbesondere aus der Gruppe Styrol, Methylmethacrylat, DCPA, Butandioldiacrylat, Ethylenglykoldiacrylat und Tris-Allyl-Cyanurat, vorzugsweise Styrol, hergestellt ist.

**6.** Thermoplastische ABS-Formmasse nach einem oder mehreren der Ansprüche 1 bis 5, wobei die thermoplastische ABS-Formmasse weniger als 1 Gew.-% Salz, bezogen auf das Gesamtgewicht der thermoplastischen ABS-Formmasse, enthält, wobei das Salz vorzugsweise ausgewählt ist aus der Gruppe bestehend aus Magnesiumsulfat, Aluminiumsulfat, Calciumchlorid, Magnesiumchlorid, Magnesiumhydroxid und zweiwertigen Salzen und dreiwertigen Salzen, insbesondere Magnesium und Calcium, mit Schwefelsäure und Kombinationen davon.

**7.** Thermoplastische ABS-Formmasse nach einem oder mehreren der Ansprüche 1 bis 6, wobei die Pfropfgrundlage-B1-Teilchen in Komponente B einen Gelgehalt, bestimmt nach dem in der Beschreibung beschriebenen Verfahren, von mehr als 66 %, vorzugsweise mehr als 68 %, stärker bevorzugt mehr als 70 %, aufweisen.

**8.** Thermoplastische ABS-Formmasse nach einem oder mehreren der Ansprüche 1 bis 7, wobei die Pfropfgrundlage-B1-Teilchen in Komponente B einen Quellungsindex, bestimmt nach dem in der Beschreibung beschriebenen Verfahren, von weniger als 42, vorzugsweise weniger als 40, stärker bevorzugt weniger als 38, aufweisen.

**9.** Thermoplastische ABS-Formmasse nach einem oder mehreren der Ansprüche 1 bis 8, wobei die thermoplastische ABS-Formmasse einen Gelbwert-Index YI, bestimmt nach dem in der Beschreibung beschriebenen Verfahren, von 20 oder weniger bei einer Formtemperatur von 260 °C aufweist.

**10.** Thermoplastische ABS-Formmasse nach einem oder mehreren der Ansprüche 1 bis 9, wobei mindestens 40 Gew.-% der gepfropften Kautschukteilchen der Komponente B ein Aspektverhältnis von mehr als 1, vorzugsweise von mindestens 1,25 und noch stärker bevorzugt von mindestens 1,5, bezogen auf das Gesamtgewicht der in der thermoplastischen ABS-Formmasse enthaltenen Komponente B, aufweisen.

**11.** Thermoplastische ABS-Formmasse nach einem oder mehreren der Ansprüche 1 bis 10, wobei die gepfropften Kautschukteilchen der Komponente B eine ellipsoide Form haben und wobei das Aspektverhältnis das Verhältnis zwischen einem größten Durchmesser und einem kleinsten Durchmesser des Ellipsoids ist.

**12.** Formteil, Granulat, Folie und/oder Beschichtung, hergestellt aus einer thermoplastischen ABS-Formmasse nach einem oder mehreren der Ansprüche 1 bis 11.

**13.** Formteil, Granulat, Folie und/oder Beschichtung nach Anspruch 12, wobei das Formteil, das Granulat, die Folie und/oder die Beschichtung eine Oberfläche mit Teilchen der gepfropften Kautschukkomponente B der thermoplastischen ABS-Formmasse aufweist, wobei die gepfropften Kautschukteilchen unterhalb der Oberfläche in einem Abstand von 0,01 bis 10 μm zur Oberfläche des Formteils, des Granulats, der Folie oder der Beschichtung ein Aspektverhältnis von mehr als 1, vorzugsweise mindestens 1,25 und noch stärker bevorzugt mindestens 1,5, aufweisen.

**14.** Formteil, Granulat, Folie und/oder Beschichtung nach Anspruch 13, wobei die Oberfläche durch die thermoplastische ABS-Formmasse gebildet wird.

**15.** Verwendung der thermoplastischen ABS-Formmasse nach einem oder mehreren der Ansprüche 1 bis 11 zur Herstellung von Formteilen, Granulaten, Folien und/oder Beschichtungen, insbesondere durch Extrusion, Thermoformung und/oder Spritzgießen.

**Revendications**

**1.** Masse de moulage thermoplastique en ABS, comprenant

30-80 % en poids, par rapport au poids de la masse de moulage, d'au moins une matrice de copolymère thermoplastique A, les composants étant basés sur le poids sec d'A :

A1 : 50-80 % en poids de styrène et/ou d'$\alpha$-méthylstyrène et/ou de p-méthylstyrène
A2 : 20-40 % en poids de (méth)acrylonitrile
A3 : 0-20 % en poids d'un ou plusieurs monomères copolymérisables, de préférence des acrylates en $C_1$-$C_8$ et/ou du méthacrylate de méthyle,

19,99-60 % en poids, par rapport au poids de la masse de moulage, d'au moins un copolymère ABS B, les composants étant basés sur le poids sec de B :

B1 : 30-90 % en poids d'un ou de plusieurs composants du caoutchouc comme base de greffage, ayant une température de transition vitreuse inférieure à 0 °C, fabriqués de, sur la base du poids sec de B1,

B11 : 50 à 100 % en poids d'un ou plusieurs de butadiène ou isoprène, et
B12 : éventuellement, 0-50 % en poids d'autres monomères, en particulier du groupe du styrène, du méthacrylate de méthyle, du DCPA, du diacrylate de butanediol, du diacrylate d'éthylène glycol et du tris-allyl-cyanurate, de préférence du styrène,

B2 : 10-70 % en poids d'une ou plusieurs étapes de greffage, polymérisées après la base de greffage, avec, sur la base du poids sec de B2,

B21 : 50-90 % en poids de styrène, $\alpha$-méthylstyrène et/ou p-méthylstyrène,
B22 : 5-40 % en poids de (méth)acrylonitrile,
B21 : 0-40 % en poids d'un ou plusieurs monomères copolymérisables, de préférence des acrylates en $C_1$-$C_8$ et/ou du méthacrylate de méthyle,

0-40 % en poids, en particulier 0-20 % en poids, par rapport au poids de la masse de moulage, d'un ou plusieurs polymères C choisis dans le groupe des polycarbonates, des polyesters, des carbonates de polyester et des polyamides,
0,01-20 % en poids, en particulier 0,3-5 % en poids, par rapport au poids de la masse de moulage, d'un ou plusieurs additifs D, en particulier du groupe des stabilisateurs thermiques, des stabilisateurs UV, des dispersants, des pigments, des lubrifiants, des colorants, des charges inorganiques et des charges organiques, dans laquelle, dans la masse de moulage ABS thermoplastique, en particulier après traitement thermoplastique par extrusion, thermoformage et/ou moulage par injection, le caoutchouc greffé du composant B est présent sous forme de petites particules avec une taille moyenne de particules basée sur le poids, déterminée à l'aide d'une ultracentrifugeuse ou d'une centrifugeuse à disque, de 50 à 950 nm, en particulier de 80 à 600 nm, et dans laquelle 10 à 90 %, en particulier 30 à 90 % en poids des particules de caoutchouc greffées ont un rapport d'aspect, déterminé par des images de microscopie électronique en transmission (MET) en mesurant l'axe le plus long et l'axe le plus court, supérieur à 1, en particulier d'au moins 1,25.

2. Masse de moulage ABS thermoplastique selon la revendication 1, dans laquelle la distribution de taille de particules basée sur le poids, déterminée à l'aide d'une ultracentrifugeuse ou d'une centrifugeuse à disque, des particules de caoutchouc greffées du composant B est pour > 90 % en poids de toutes les particules de caoutchouc greffées dans la plage de 50 à 950 nm, et dans laquelle 10 à 90 % en poids, en particulier 30 à 90 % en poids des particules de caoutchouc greffées ont un rapport d'aspect supérieur à 1, de préférence au moins 1,25 et encore plus préférablement au moins 1,5 dans une zone de surface de 0,01 à 10 $\mu$m sous la surface de la masse de moulage ABS thermoplastique.

3. Masse de moulage ABS thermoplastique selon la revendication 1 ou 2, dans laquelle les particules du composant B ont une distribution de taille de particules bimodale basée sur le poids pour les particules < 70 % en poids, de préférence < 65 % en poids, de toutes les particules de caoutchouc greffées dans la plage de 50 à 150 nm.

4. Masse de moulage ABS thermoplastique selon l'une ou plusieurs des revendications 1 à 3, dans laquelle le composant A a une teneur en acrylonitrile inférieure à 40 % en poids, plus préférentiellement inférieure à 36 % en poids, par rapport au poids du composant A, et le caoutchouc B1 du composant B est constitué de butadiène ou de butadiène et de styrène.

5. Masse de moulage ABS thermoplastique selon l'une ou plusieurs des revendications 1 à 4, dans laquelle les particules du composant B ont une distribution de taille de particules bimodale basée sur le poids et le caoutchouc B1 est fabriqué à partir de butadiène et de 1 à 20 % en poids, par rapport au poids du caoutchouc B1, d'autres monomères, en particulier du groupe du styrène, du méthacrylate de méthyle, du DCPA, du diacrylate de butanediol, du diacrylate d'éthylène glycol et du tris-allyl-cyanurate, de préférence du styrène.

6. Masse de moulage ABS thermoplastique selon une ou plusieurs des revendications 1 à 5, dans laquelle la masse de moulage ABS thermoplastique comprend moins de 1 % en poids de sel, par rapport au poids total de la masse de moulage ABS thermoplastique, dans laquelle le sel est de préférence choisi dans le groupe constitué par le sulfate de magnésium, le sulfate d'aluminium, le chlorure de calcium, le chlorure de magnésium, l'hydroxyde de magnésium et les sels bi-valents et les sels trivalents, en particulier le magnésium et le calcium, avec l'acide sulfurique et les combinaisons de ceux-ci.

7.  Masse de moulage ABS thermoplastique selon l'une ou plusieurs des revendications 1 à 6, dans laquelle les particules à base de greffage B1 du composant B ont une teneur en gel, déterminée selon la méthode décrite dans la spécification, supérieure à 66 %, de préférence supérieure à 68 %, de préférence encore supérieure à 70 %.

8.  Masse de moulage ABS thermoplastique selon l'une ou plusieurs des revendications 1 à 7, dans laquelle les particules à base de greffage B1 du composant B ont un indice de gonflement, déterminé selon la méthode décrite dans la spécification, inférieur à 42, de préférence inférieur à 40, plus préférentiellement inférieur à 38.

9.  Masse de moulage ABS thermoplastique selon une ou plusieurs des revendications 1 à 8, dans laquelle la masse de moulage ABS thermoplastique a un indice de jaunissement YI, déterminé selon la méthode décrite dans la spécification, de 20 ou moins à une température de moulage de 260 °C.

10. Masse de moulage ABS thermoplastique selon l'une ou plusieurs des revendications 1 à 9, dans laquelle au moins 40 % en poids des particules de caoutchouc greffées du composant B ont un rapport d'aspect supérieur à 1, de préférence au moins 1,25 et encore plus préférablement au moins 1,5, par rapport au poids total du composant B compris dans la masse de moulage ABS thermoplastique.

11. Masse de moulage ABS thermoplastique selon l'une ou plusieurs des revendications 1 à 10, dans laquelle les particules de caoutchouc greffées du composant B ont une forme d'ellipsoïde et dans laquelle le rapport d'aspect est le rapport entre le plus grand diamètre et le plus petit diamètre de l'ellipsoïde.

12. Pièce moulée, granulé, feuille et/ou revêtement produit à partir d'une masse de moulage ABS thermoplastique selon l'une ou plusieurs des revendications 1 à 11.

13. Pièce moulée, granulé, feuille et/ou revêtement selon la revendication 12, dans laquelle la pièce moulée, le granulé, la feuille et/ou le revêtement a une surface avec des particules du composant caoutchouc greffé B de la masse de moulage ABS thermoplastique, dans laquelle les particules de caoutchouc greffé ont un rapport d'aspect de plus de 1, de préférence au moins 1,25 et encore plus préférablement au moins 1,5, sous la surface dans une distance de 0,01 à 10 μm à la surface de la pièce moulée, du granulé, de la feuille ou du revêtement.

14. Pièce moulée, granulé, feuille et/ou revêtement selon la revendication 13, dans laquelle la surface est formée par la masse de moulage ABS thermoplastique.

15. Utilisation de la masse de moulage thermoplastique ABS selon une ou plusieurs des revendications 1 à 11 pour la production de pièce moulées, de granulés, de feuilles et/ou de revêtements, notamment par extrusion, thermoformage et/ou moulage par injection.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2037784 A
- US 5151026 A
- US 5232649 A
- WO 2017093468 A1
- JP 61053362 S, Toshiba
- JP 59027776 S, Toray
- EP 0534235 A
- US 5817266 A
- US 6165399 A
- WO 2015000873 A

- EP 0258741 A
- EP 062901 A
- DE 102005022632
- WO 2014170406 A
- WO 2015165810 A1
- DE 2427960 A
- EP 0062901 A
- DE 1300266 B
- DE 1495730 A

**Non-patent literature cited in the description**

- **W. SCHOLTAN** ; **H. LANGE**. *Kolloid Z. u. Z. Polymere*, 1972, vol. 250, 782-796
- **G. LAGALY** ; **O. SCHULZ** ; **R. ZIEMEHL**. Dispersionen und Emulsionen: Eine Einführung in die Kolloidik feinverteilter Stoffe einschließlich der Tonminerale. Steinkopf-Verlag, 1997, 282
- *Pfropfcopolymer B, Allgemeine Vorgehensweise*, 34-35
- **KUNSTSTOFF-HANDBUCH**. Vieweg-Daumiller. Carl-Hanser-Verlag, 1969, vol. V, 122

- Kunststoff-Handbuch. Carl Hanser Verlag, 1973, vol. VIII, 695
- **HANS ZWEIFEL**. Plastics Additives Handbook. Hanser Publ., 2009
- Aufbereiten von Polyolefinen. VDI-Verlag, 1984, 185
- *CHEMICAL ABSTRACTS*, 68610-51-5
- Methoden der Organischen Chemie. **HOUBEN-WEYL**. Makromolekulare Stoffe. Thieme Verlag, 1961, 307